# EUROPÄISCHE PATENTSCHRIFT

(11) **EP 2 876 124 B1**
(45) Veröffentlichungstag und Bekanntmachung des Hinweises auf die Patenterteilung: **09.01.2019**
(21) Anmeldenummer: 13193671.8
(22) Anmeldetag: 20.11.2013
(51) Int. Cl.: C08G 63/08, C08G 63/78, C08L 67/04

(54) **VERFAHREN SOWIE VORRICHTUNG ZUR HERSTELLUNG EINER KRISTALLISIERBAREN POLYMILCHSÄUREMISCHUNG SOWIE POLYMILCHSÄUREMISCHUNG**
METHOD AND APPARATUS FOR MANUFACTURING A CRYSTALLISABLE POLYLACTIDE MIXTURE AND POLYLACTIDE MIXTURE
PROCÉDÉ ET DISPOSITIF DE FABRICATION D'UN MÉLANGE D'ACIDE POLYLACTIQUE ET MÉLANGE D'ACIDE POLYLACTIQUE

(43) Veröffentlichungstag der Anmeldung: 27.05.2015
(73) Patentinhaber: Uhde Inventa-Fischer GmbH, 13509 Berlin (DE); thyssenkrupp AG, 45143 Essen (DE)
(72) Erfinder: Hagen, Rainer, 13465 Berlin (DE); Mühlbauer, Udo, 10119 Berlin (DE); Paetz, Caspar, 13353 Berlin (DE)
(74) Vertreter: Pfenning, Meinig & Partner mbB

(56) Entgegenhaltungen:
- EP-A1- 1 577 346
- EP-A1- 2 058 351
- EP-A1- 2 607 399
- WO-A1-93/15127
- WO-A1-2013/039266

## Beschreibung

Die vorliegende Erfindung betrifft ein kontinuierlich oder absatzweise durchführbares Verfahren zur Herstellung einer kristallisierbaren Polymilchsäuremischung, das von Milchsäure ausgeht. Dabei wird Milchsäure zu einem Oligomer polykondensiert, das Oligomer zu einem Roh-Lactid depolymerisiert, das Roh-Lactid zu einem Rein-Lactid aufgereinigt , wobei bei der Aufreinigung eine Fraktionierung in eine L- bzw. D-Lactid-reiche Fraktion sowie eine meso-Lactid-reiche Fraktion erfolgt und anschließend eine separate Ringöffnungspolymerisation der erhaltenen Lactid-Fraktionen durchgeführt wird. Anschließend erfolgt eine Vermischung der durch die Ringöffnungspolymerisation erzeugten einzelnen Polymilchsäure-Chargen oder-Ströme. Mit dem erfindungsgemäßen Verfahren werden exzellente Ausbeuten bezogen auf die eingesetzte Milchsäure erreicht. Ebenso betrifft die vorliegende Erfindung eine Vorrichtung zur Durchführung des voranstehend skizzierten Verfahrens, sowie eine Polymilchsäuremischung.

In großtechnischen Produktionsverfahren zur Herstellung von Polymilchsäure (PLA) werden häufig meso-Lactid-haltige Nebenprodukte mit Wasser durch Hydrolyse in Milchsäure zurückverwandelt und für andere Zwecke als für die Herstellung von PLA verwendet. Beispiele für solche Verwendungen sind die Herstellung von Milchsäureestern für Lösungsmittel und die Herstellung von Alkali- und Erdalkalisalzen der Milchsäure für Futter- und Konservierungsmittel.

Für einen PLA-Prozess stellen diese Verwendungen einen Verlust an Ausbeute dar. Die genannten Verwendungen haben in den meisten Fällen einen geringeren Wert im Vergleich zu PLA. Diese Produkte sind auch aus preisgünstigeren Milchsäurequalitäten zugänglich, an die wesentlich geringere Anforderungen an die Reinheit gestellt werden als an Milchsäure für die Herstellung von PLA. Außerdem erfordert dieses Vorgehen einen zusätzlichen Aufwand in Handhabung, Verpackung und Transport.

Vom technischen und wirtschaftlichen Standpunkt aus betrachtet ist es also erwünscht, auch das meso-Lactid-haltige Nebenprodukt in ein technisch verwendbares PLA umzusetzen und so Verluste zu vermeiden.

Es sind Verfahren bekannt geworden, die meso-Lactid zu Poly-DL-Milchsäure (PDLLA) polymerisieren. Dabei entstehen amorphe, d. h. nicht kristallisierbare PLA-Typen, die bereits beim Glasübergangspunkt in eine Schmelze übergehen. Dieser Punkt hängt etwas vom D-Lactid-Gehalt des zur Polymerisation verwendeten meso-Lactids ab, liegt aber unterhalb von 60°C und damit erheblich niedriger als der Schmelzpunkt von teilkristallinen PLA-Typen, der bei 135 bis 180 °C liegt. Die Stabilität der amorphen PDLLA-Typen gegen Hydrolyse ist gering, ihre mechanischen Eigenschaften wie Festigkeit, Elastizitätsmodul und Schlagzähigkeit sind deutlich niedriger gegenüber kristallisierbaren Poly-L-Milchsäure (PLLA)-Typen mit 0-6% Anteil von D-Milchsäureeinheiten in der Polymerkette. Meist handelt es sich um Spezialprodukte für einen sehr eingeschränkten Anwendungsbereich und mit dementsprechend geringem Mengenbedarf, beispielsweise in der Medizin.

Hinzu kommt, dass meso-Lactid oder ein Lactidgemisch mit höheren Anteilen an meso-Lactid noch aufwendiger gereinigt werden muss als L-Lactid. Es erreicht sonst bei der Polymerisation nur geringe Molmasse und verfärbt sich dabei in unerwünschter Weise gelb bis braun. Verfahren zur Polymerisation von meso-Lactid oder meso-Lactid-reichen Gemischen wurden deshalb nie als Mittel zur Verbesserung der Gesamtausbeute in einem großtechnischen Produktionsverfahren zur Herstellung von PLA beschrieben.

Die WO93/15127 offenbart ein Verfahren zur Herstellung von PLA umfassend die Schritte, Kondensation der Milchsäure zu einem Oligomer, Depolymerisation des Oligomers zu einem Roh-Lactid, Aufreinigung des Roh-Lactids zu einem Rein-Lactid, und Durchführen einer Ringöffnungspolymerisation.

Aus WO 88/10260 (Böhringer Ingelheim) ist ein Poly-meso-Lactid (PDLLA) bekannt sowie Copolymerisate, die meso-Lactid-Einheiten enthalten. Zur Polymerisation wird ein besonders reines meso-Lactid mit einem Schmelzpunkt von über 48 °C verwendet, das durch Rektifikation aus einem Gemisch von meso-Lactid und D,L-Lactid hergestellt wird. Dabei bezeichnet D,L-Lactid eine Mischung aus D- und L-Lactid im Verhältnis 1:1. Die Schrift enthält keine Hinweise, dieses Polymerisat mit PLLA oder Poly-D-Milchsäure (PDLA) zu mischen, noch auf die Eigenschaften einer solchen Mischung.

EP 1 577 346 A1 (Mitsubishi Plastics Inc.) beschreibt eine Mischung aus einem im Wesentlichen amorphen PLA und einem kristallinen PLA, wobei das Mischungsverhältnis 10 bis 200 Massenteile des kristallinen PLAs pro 100 Massenteile des amorphen PLAs beträgt (entspricht einem Anteil von 33,3% bis 90,9% des amorphen PLAs). Das Verhältnis der L-Milchsäureeinheiten zu den D-Milchsäureeinheiten im amorphen PLA beträgt dabei zwischen 92:8 und 8:92 (D-Anteil zwischen 8 und 92%) und im kristallinen PLA nicht weniger als 94:6 (94% L) und nicht mehr als 6:94 (6% L).

Ausgehend hiervon ist es Aufgabe dieser Erfindung, eine PLA-Mischung zu schaffen, die gute Formbarkeit im Tiefziehprozess zeigt und dabei ausreichende Schlagzähigkeit und Wärmeformbeständigkeit behält. Die Mischung zeigt die hohe Schlagzähigkeit und Wärmeformbeständigkeit des kristallinen PLAs. Das amorphe PLA macht die Mischung flexibel und verbessert damit die Formbarkeit während eines Tiefziehprozesses.

Zudem ist es die Aufgabe der vorliegenden Erfindung, einen Prozess zur Verfügung zu stellen, der den Rohstoff Milchsäure annähernd vollständig in marktfähiges PLA umsetzt.

Es ist außerdem die Aufgabe der vorliegenden Erfindung, ein PLA zu schaffen, das die im Herstellungsprozess aus L-Milchsäure anfallenden Nebenprodukte an meso-Lactid und D-Lactid aufnehmen kann, dabei kristallisierbar bleibt und die für die technische Anwendung wichtigen Eigenschaften behält.

Diese Aufgabe wird mit dem Verfahren gemäß Patentanspruch 1 sowie mit der Vorrichtung mit den Merkmalen des Patentanspruchs 13 gelöst. Patentansprüche 20 und 23 betreffen jeweils eine Polymilchsäuremischung, die gemäß dem erfindungsgemäßen Verfahren herstellbar ist. Die jeweiligen abhängigen Patentansprüche stellen dabei vorteilhafte Weiterbildungen dar.

Die Erfindung betrifft somit ein Verfahren zur Herstellung einer kristallisierbaren Polymilchsäuremischung (PLA), bei dem
a) Milchsäure zu einem Oligomer polykondensiert wird,
b) das Oligomer zu einem Roh-Lactid depolymerisiert wird,
c) das Roh-Lactid zu einem Rein-Lactid gereinigt wird, wobei eine gleichzeitige Auftrennung in eine L-Lactid-reiche Fraktion mit einem Gehalt von maximal 6 Gew.-% D-Milchsäureeinheiten und eine meso-Lactid-reiche Fraktion mit einem Gehalt von mindestens 15 Gew.-% meso-Lactid oder in eine D-Lactid-reiche Fraktion mit einem Gehalt von maximal 6 Gew.-% L-Milchsäureeinheiten und eine meso-Lactid-reiche Fraktion mit einem Gehalt von mindestens 15 Gew.-% meso-Lactid erfolgt,
d) eine separate Ringöffnungspolymerisation der meso-Lactid-reichen Fraktion zu einer meso-Lactid-reichen Polymilchsäureformmasse (PDLLA) und der L-Lactid- bzw. der D-Lactid-reichen Fraktion zu einer L-Lactid-reichen Polymilchsäureformmasse (PLLA) bzw. zu einer D-Lactid-reichen Polymilchsäureformmasse (PDLA) durchgeführt wird, sowie
e) Erzeugen der Polymilchsäuremischung (PLA) durch Mischen zumindest eines Teils der meso-Lactid-reichen Polymilchsäureformmasse (PDLLA) und zumindest eines Teils der L-Lactid-reichen Polymilchsäureformmasse (PLLA) bzw. zumindest eines Teils der D-Lactid-reichen Polymilchsäureformmasse (PDLA).

Der besondere Vorteil des erfindungsgemäßen Verfahrens ist dabei, dass die molare Ausbeute der kristallisierbaren Polymilchsäuremischung, bezogen auf die eingesetzte Milchsäure sehr hoch, und insbesondere mindestens 95% beträgt. Durch die oben beschriebene integrierte Verfahrensführung, bei der von Milchsäure ausgegangen wird und ein fertiges Polymilchsäuregemisch erhalten wird, kann somit eine äußerst ökonomische Verfahrensführung gewährleistet werden.

Die erfindungsgemäße Verfahrensführung umfasst zwei Varianten. Gemäß einer ersten Variante erfolgt im oben beschriebenen Schritt c) eine Auftrennung in eine L-Lactid-reiche Fraktion sowie eine meso-Lactid reiche Fraktion. Alternativ ist es ebenso möglich, eine Auftrennung in eine D-Lactid-reiche Fraktion und eine meso-Lactid-reiche Fraktion zu ermöglichen. Zweckmäßigerweise wird für die erste Variante Milchsäure eingesetzt, die einen hohen Anteil an L-Milchsäureeinheiten aufweist, während für die zweite Variante zweckmäßigerweise eine Milchsäure mit einem hohen Anteil von D-Milchsäureeinheiten eingesetzt wird.

Die im Verfahren zur Anwendung kommenden einzelnen Verfahrensschritte sind für sich genommen bereits aus dem Stand der Technik bekannt. Bezüglich technischer Details zu den einzelnen Reaktionsstufen wird diesbezüglich auf die beiden Patentanmeldung WO 2009/030395 A1 sowie WO 2009/039397 A1 verwiesen, deren Offenbarungsgehalt auch zum Gegenstand der vorliegenden Patentanmeldung gemacht wird.

Für den Fall, dass ein Mischen der meso-Lactid-reichen Polymilchsäureformmasse (PDLLA) und der L-Lactid-reichen Polymilchsäureformmasse (PLLA) erfolgt, ist es vorteilhaft, wenn der durchschnittliche Gehalt der D-Milchsäureeinheiten in der resultierenden Polymilchsäuremischung (PLA) zwischen 6 und 30 Gew.-%, bevorzugt zwischen 6 und 20 Gew.-% beträgt.

Für den Fall, dass ein Mischen der meso-Lactid-reichen Polymilchsäureformmasse (PDLLA) und der D-Lactid-reichen Polymilchsäureformmasse (PDLA) erfolgt, ist es vorteilhaft, wenn der durchschnittliche Gehalt der L-Milchsäureeinheiten in der resultierenden Polymilchsäuremischung (PLA) zwischen 6 und 30 Gew.-%, bevorzugt zwischen 6 und 20 Gew.-% beträgt.

Die durchschnittlichen Gehalte an L- bzw. D-Milchsäureeinheiten kann durch den jeweiligen Gehalt der L- bzw. D-Milchsäureeinheiten der jeweiligen PDLLA mit der PLLA bzw. PDLA sowie den Verhältnissen der beiden Formmassen gezielt eingestellt werden.

Weiter ist es vorteilhaft, wenn die L-Lactid-reiche Fraktion auf einen Gehalt von 0 bis 6 Gew.-% an Milchsäureeinheiten aufgereinigt wird. Bevorzugt wird hierbei bereits von im Wesentlichen isomerenreiner L-Milchsäure ausgegangen. Dies ermöglicht die Herstellung einer L-Lactid-reichen Poly-Lactidformmasse (PLLA), die einen Gehalt von 0 bis 6 Gew.-% an D-Milchsäureeinheiten aufweist.

Für den Fall, dass in oben beschriebenem Schritt c) eine Separierung in eine D-Lactid- und eine meso-Lactid-reiche Fraktion erfolgt, ist es ebenso vorteilhaft, wenn die D-Lactid-reiche Fraktion auf einen Gehalt von 0 bis 6 Gew.-% L-Milchsäureeinheiten und/oder die hieraus erzeugte D-Lactid-reiche Polylactidformmasse (PDLA) einen Gehalt von 0 bis 6 Gew.-% an L-Milchsäureeinheiten aufweist.

In jedem Fall ist es vorteilhaft, dass die anfallende meso-Lactid-reiche Fraktion auf einen Gehalt von 15 bis 100 Gew.-%, bevorzugt 50 bis 100 Gew.-% meso-Lactid aufgereinigt wird und/oder die hieraus erzeugte meso-Lactid-reiche Polymilchsäureformmasse (PDLLA) einen Gehalt von meso-Lactid-Einheiten von 15 bis 100 Gew.-%, bevorzugt 50 bis 100 Gew.-% aufweist.

Zusätzlich oder alternativ zu den zuvor beschriebenen Ausführungsformen ist es weiter vorteilhaft, wenn im Falle der Erzeugung einer L-Lactid-reichen Fraktion diese auf einen Gehalt von 94 bis 100 Gew.-% an L-Milchsäureeinheiten aufgereinigt wird und/oder die hieraus erzeugte L-Lactid-reiche Poly-Lactidformmasse (PLLA) einen Gehalt von 94 bis 100 Gew.-% an L-Milchsäureeinheiten aufweist.

Für den Fall, dass im Reinigungsschritt bzw. Auftrennungsschritt eine D-Lactid-reiche Fraktion erzeugt wird, ist es bevorzugt, dass diese auf einen Gehalt von 94 bis 100 Gew.-% D-Milchsäureeinheiten aufgereinigt wird und/oder die hieraus erzeugte D-Lactid-reiche Poly-Lactidformmasse (PLLA) einen Gehalt von 94 bis 100 Gew.-% an D-Milchsäureeinheiten aufweist.

In Schritt e) ist es vorteilhaft, wenn dort zur Erzeugung der Polymilchsäuremischung (PLA) 1 bis 50 Gew.-Teile, bevorzugt 1 bis 30 Gew.-Teile der meso-Lactid-reichen Polymilchsäureformmasse (PDLLA) und 99 bis 50 Gew.-Teile, bevorzugt 99 bis 70 Gew.-Teile der L-Lactid-reichen Polymilchsäureformmasse (PLLA) bzw. 99 bis 50 Gew.-Teile, bevorzugt 99 bis 70 Gew.-Teile der D-Lactid-reichen Polymilchsäureformmasse (PDLA) gemischt werden.

Vorteilhafterweise wird im Reinigungsschritt c)
a) die meso-Lactid-reiche Fraktion auf einen Carboxylgruppengehalt von maximal 20 mmol/kg, bevorzugt maximal 10 mmol/kg, bevorzugt maximal 5 mmol/kg, besonders bevorzugt maximal 3 mmol/kg und/oder
b) die L-Lactid-reiche Fraktion bzw. die D-Lactid-reiche Fraktion auf einen Carboxylgruppengehalt von maximal 10 mmol/kg, bevorzugt maximal 5 mmol/kg
aufgereinigt.

In einer weiter bevorzugten Ausführungsform wird bei der Ringöffnungspolymerisation
a) der meso-Lactid-reichen Fraktion eine meso-Lactid-reiche Polymilchsäureformmasse (PDLLA) mit einer intrinsischen Viskosität von 0,80 bis 1,80 und/oder
b) der L-Lactid- bzw. der D-Lactid-reichen Fraktion eine L-Lactid-reichen Polymilchsäureformmasse (PLLA) bzw. eine D-Lactid-reichen Polymilchsäureformmasse (PDLA) mit einer intrinsischen Viskosität von 1,0 bis 2,0
erzeugt.

Vor, während und/oder nach dem Mischen der meso-Lactid-reichen Polymilchsäureformmasse (PDLLA) und der L-Lactid-reichen Polymilchsäureformmasse (PLLA) bzw. der D-Lactid-reichen Polymilchsäureformmasse (PDLA) können
a) Stabilisatoren und/oder Additive zugemischt werden, und/oder
b) es wird eine Entmonomerisierung,
c) eine Abkühlung und/oder Granulierung und/oder
d) eine Kristallisation, Trocknung und Abkühlung in einem Schachttrockner mit gerührter Kristallisationszone, Trocknungszone und Rohrbündelkühler
durchgeführt.

Die in Schritt a) eingesetzte Milchsäure weist bevorzugt eine Isomeren-Reinheit von mindestens 95%, weiter bevorzugt mindestens 99% auf. Als Isomeren-Reinheit wird dabei verstanden, dass bezogen auf sämtliche mögliche optische Isomere der Milchsäure, d.h. L- bzw. D-Milchsäure, der angegebene Prozentsatz den Gewichtsanteil des jeweiligen Isomers, bezogen auf die Gesamtheit der Isomere darstellt. Gemäß dieser bevorzugten Ausführungsform wird somit entweder L-Milchsäure mit einer oben definierten Isomeren-Reinheit oder D-Milchsäure mit einer oben definierten Isomeren-Reinheit eingesetzt.

Weiter bevorzugt ist, dass zumindest ein Teil der meso-Lactid-reichen Polymilchsäureformmasse (PDLLA) und zumindest ein Teil der L-Lactid-reichen Polymilchsäureformmasse (PLLA) bzw. der D-Lactid-reichen Polymilchsäureformmasse (PDLA) unmittelbar nach ihrer separaten Herstellung mittels Ringöffnungspolymerisation zumindest
a) in schmelzflüssigem Zustand gemeinsam stabilisiert und gemischt, oder
b) separat stabilisiert und entmonomerisiert sowie anschließend in schmelzflüssigem Zustand gemischt, und/oder
c) separat granuliert und zu einer Granulatmischung gemischt werden.

Die erzeugte Mischung kann in schmelzflüssiger Form unmittelbar bzw. die Granulatmischung unmittelbar oder separat weiterverarbeitet wird, insbesondere zu Formkörpern, wie z.B. Fäden, Folien oder geformten Artikeln.

Die vorliegende Erfindung betrifft ebenso eine Vorrichtung zur Herstellung einer Polymilchsäuremischung. Die erfindungsgemäße Vorrichtung umfasst dabei
a) mindestens einen Polykondensationsreaktor zur Erzeugung von Oligomeren von Milchsäure durch Polykondensation,
b) dem mindestens einen Polykondensationsreaktor nachgeschaltet mindestens eine Vorrichtung zur Erzeugung von Roh-Lactid durch Depolymerisation der Oligomeren von Milchsäure,
c) der mindestens einen Vorrichtung zur Erzeugung von Roh-Lactid nachgeschaltet mindestens eine Vorrichtung zur Reinigung des Roh-Lactids zu einem Reinlactid, die eine Auftrennung des Roh-Lactids in eine L-Lactid-reiche Fraktion mit einem Gehalt von maximal 6 Gew.-% D-Milchsäureeinheiten und eine meso-Lactid-reiche Fraktion mit mindestens 15 Gew.-% meso-Lactid oder in eine D-Lactid-reiche Fraktion mit maximal 6 Gew.-% L-Milchsäureeinheiten und eine meso-Lactid-reiche Fraktion mit mindestens 15 Gew.-% meso-Lactid ermöglicht,
d) der mindestens einen Vorrichtung zur Reinigung des Roh-Lactids nachgeschaltet mindestens zwei separate Polymerisationsreaktoren, wobei in mindestens einem ersten Polymerisationsreaktor eine Ringöffnungspolymerisation der L-Lactid- bzw. der D-Lactid-reichen Fraktion zu einer L-Lactid-reichen Polymilchsäureformmasse (PLLA) bzw. zu einer D-Lactid-reichen Polymilchsäureformmasse (PDLA) und in mindestens einem zweiten Polymerisationsreaktor eine Ringöffnungspolymerisation der meso-Lactid-reichen Fraktion zu einer meso-Lactid-reichen Polymilchsäureformmasse (PDLLA) durchgeführt wird, sowie
e) den Polymerisationsreaktoren nachgeschaltet mindestens eine Vorrichtung zum Mischen zumindest eines Teils der meso-Lactid-reichen Polymilchsäureformmasse (PDLLA) und zumindest eines Teils der L-Lactid-reichen Polymilchsäureformmasse (PLLA) bzw. zumindest eines Teils der D-Lactid-reichen Polymilchsäureformmasse (PDLA).

Insbesondere umfasst die Vorrichtung zur Reinigung des Roh-Lactids (108) eine zusätzliche Reinigungsvorrichtung (121) für die meso-Lactid-reiche Fraktion (119), bevorzugt eine Rektifikationskolonne oder eine Trennwandkolonne. Trennwandkolonnen und Rektifikationskolonnen sind beispielsweise aus der WO 2009/030395 A1 bekannt. Hinsichtlich des prinzipiellen Aufbaus derartiger Reinigungsvorrichtungen wird auf den Offenbarungsgehalt dieser Offenlegungsschrift verwiesen. Die dort beschriebenen Reinigungsvorrichtungen, insbesondere die Trennwandkolonne bzw. die Rektifikationskolonne eignen sich auch für die Zwecke der vorliegenden Erfindung.

Bevorzugt ist die Vorrichtung zur Reinigung des Roh-Lactids eine Trennwandkolonne mit mindestens zwei Seitenabzügen und/oder eine Vorrichtung zur Umkristallisation des Lactids aus einer Schmelze oder Lösung.

Vorteilhafterweise ist die Vorrichtung zum Mischen ein statischer Mischer für Schmelzeströme und/oder ein Granulatmischer. Mit dem Mischer für Schmelzeströme, beispielsweise einem statischen Mischer lassen sich somit unmittelbar die hergestellten Polymilchsäure-Schmelzen vermischen. Ebenso ist es jedoch möglich, zunächst eine separate Granulierung der einzelnen Polymilchsäure-Schmelzen vorzunehmen und ein Granulatgemisch bereitzustellen. Es ist auch eine Kombination denkbar, beispielsweise, dass die Schmelzeströme zunächst zu einem homogenen Gemisch vermischt werden, das anschließend granuliert wird.

Vorzugsweise ist den Polymerisationsreaktoren nachgeschaltet mindestens eine Zufuhr für Stabilisatoren und/oder Additive, mindestens eine Entmonomerisierungsvorrichtung, mindestens eine Granuliervorrichtung, mindestens eine Kristallisationsvorrichtung und/oder mindestens eine Trocknungsvorrichtung nachgeschaltet.

Gemäß einer weiteren vorteilhaften Ausführungsform ist dem mindestens einen ersten Polymerisationsreaktor und dem mindestens einen zweiten Polymerisationsreaktor
a) eine Zusammenführung für zumindest Teile der jeweilig erzeugten Polylactidströme mit einem statischen Mischelement sowie ggf. dem statischen Mischelement vorgeschaltet eine Zugabemöglichkeit für Stabilisatoren und/oder Additive, oder
b) jeweils eine separate Zugabemöglichkeit für Stabilisatoren und/oder Additive, nachfolgend jeweils eine separate Entmonomerisierungsvorrichtung, und/oder
c) jeweils eine separate Granuliervorrichtung sowie ein Granulatmischer
nachgeschaltet.

Weiter bevorzugt schließt sich an den Granulatmischer eine Vorrichtung zur Erzeugung einer Schmelze aus dem Granulat, bevorzugt ein Extruder sowie eine Vorrichtung zur Verarbeitung der Schmelze, insbesondere eine Granuliervorrichtung, eine Kristallisationsvorrichtung, eine Trocknungsvorrichtung und/oder eine Vorrichtung zur Herstellung von Formkörpern an.

Weiter betrifft die vorliegende Erfindung eine Polymilchsäuremischung herstellbar nach dem erfindungsgemäßen Verfahren.

Die Polymilchsäuremischung (PLA) zeichnet sich durch einen durchschnittlichen Gehalt an
a) L-Milchsäureeinheiten zwischen 70 und 94 Gew.-%, bevorzugt zwischen 80 und 94 Gew.-% und D-Milchsäureeinheiten zwischen 6 und 30 Gew.-%, bevorzugt 6 bis 20 Gew.-%, oder
b) D-Milchsäureeinheiten zwischen 70 und 94 Gew.-%, bevorzugt zwischen 80 und 94 Gew.-% und L-Milchsäureeinheiten zwischen 6 und 30 Gew.-%, bevorzugt 6 bis 20 Gew.-%, aus.

Die Zugfestigkeit der erfindungsgemäßen Polymilchsäuremischung (PLA) beträgt dabei mindestens 60 MPa, gleichzeitig beträgt die Bruchdehnung mindestens 5,0 %, gemessen nach DIN EN ISO 527. Die Polymilchsäuremischung zeichnet sich dabei insbesondere durch eine hohe Stabilität aus, da diese Werte, d.h. Zugfestigkeit und Bruchdehnung auch in feuchter Luft von 90% relativer Feuchte bei einer Temperatur von 40°C über mindestens 30 Tage beibehalten werden können.

Eine bevorzugte Ausführungsform der Polymilchsäuremischung zeichnet sich durch einen Gehalt von
a) 1 bis 50 Gew.-Teilen, bevorzugt 1 bis 30 Gew.-Teilen einer meso-Lactid-reichen Polymilchsäureformmasse (PDLLA) mit einem von meso-Lactid-Einheiten abgeleiteten Gehalt von 15 Gew.-% bis 100 Gew.-%, bevorzugt 50 bis 100 Gew.-%,
   und
b) 99 bis 50 Gew.-Teilen, bevorzugt 99 bis 70 Gew.-Teilen einer L-Lactid-reichen Polymilchsäureformmasse (PLLA) mit einem Gehalt von 0 bis 6 Gew.-% an D-Milchsäureeinheiten bzw. einer D-Lactid-reichen Polymilchsäureformmasse (PDLA) mit einem Gehalt von 0 bis 6 Gew.-% an L-Milchsäureeinheiten aus.

Vorteilhaft hierbei ist, dass die Mischung ohne Zugabe von Nukleierungsmitteln und Kristallisationsbeschleunigern einen Kristallinitätsgrad aufweist, der höchstens 10% unter dem Kristallinitätsgrad einer reinen polymerisierten und kristallisierten L-Lactid-reichen Polymilchsäureform-masse (PLLA) mit einem Gehalt von 0 bis 6 Gew.-% an D-Milchsäureeinheiten bzw. einer D-Lactid-reichen Polymilchsäureformmasse (PDLA) mit einem Gehalt von 0 bis 6 Gew.-% an L-Milchsäureeinheiten liegt.

Die erfindungsgemäße Polymilchsäuremischung kann als homogenes Gemisch der meso-Lactid-reichen Polymilchsäureformmasse (PDLLA) und der L-Lactid-reichen Polymilchsäureformmasse (PLLA) bzw. der D-Lactid-reichen Polymilchsäureformmasse (PDLA) oder als Granulat dieses Gemisches vorliegen. Ebenso umfasst die Erfindung die Möglichkeit, dass die Polymilchsäuremischung mit den oben genannte Gehalten an L-, D-Milchsäureeinheiten und/oder PDLLA bzw. PLLA in Form einer Mischung eines Granulates der meso-Lactid-reichen Polymilchsäureform-masse (PDLLA) und eines Granulates der L-Lactid-reichen Polymilchsäureform-masse (PLLA) bzw. der D-Lactid-reichen Polymilchsäureformmasse (PDLA), vorliegt. Wenn dieses Granulatgemisch aufgeschmolzen und homogenisiert wird, weist ein daraus hergestellter Formkörper die oben beschriebenen vorteilhaften Eigenschaften (Zugfestigkeit, Bruchdehnung, etc.) auf.

Die voranstehend beschrieben erfindungsgemäße Polymersäuremischung ist dabei insbesondere gemäß dem eingangs beschriebenen Verfahren herstellbar.

Die vorliegende Erfindung wird anhand der nachfolgenden Ausführungen sowie den beigefügten Figuren und Beispielen näher erläutert, ohne die Erfindung auf die dort dargestellten speziellen Ausführungen zu beschränken.

Dabei zeigen:
Figur 1 eine erste Variante einer erfindungsgemäßen Verfahrensführung.
Figur 1a eine zweite Variante einer erfindungsgemäßen Verfahrensführung.
Figur 2 eine dritte Variante einer erfindungsgemäßen Verfahrensführung.
Figur 3 eine vierte Variante einer erfindungsgemäßen Verfahrensführung.
Figur 4 eine fünfte Variante einer erfindungsgemäßen Verfahrensführung sowie
Figur 4a eine sechste Variante einer erfindungsgemäßen Verfahrensführung.

### Vorbemerkungen:

Alle Prozentangaben sind Massenprozente.

Der Begriff Milchsäureeinheiten wird verwendet für die Milchsäureestergruppe mit der Molmasse 72 Da, die im Lactid und in der Polymilchsäure vorkommt.

Das erfindungsgemäße Verfahren wird für den in der Praxis überwiegend verwendeten Rohstoff L-Milchsäure beschrieben. Die Erfindung lässt sich jedoch sinngemäß auch für den Rohstoff D-Milchsäure anwenden.

Unter der Bezeichnung PLLA ist im Folgenden ein PLA mit einem Gehalt an L-Milchsäureeinheiten von mehr als 94% zu verstehen. Dasselbe gilt für die Bezeichnung PDLA und den Gehalt an D-Milchsäureeinheiten.

Die Bezeichnung PDLLA wird für das amorphe PLA mit mehr als 6% D-Milchsäureeinheiten verwendet.

Bei der Herstellung von PLA durch Ringöffnungspolymerisation von Lactid wird der Rohstoff Milchsäure in der Regel durch Polykondensation in ein Oligomer mit einer Molmasse von 162 bis etwa 5000 Da umgesetzt. Aus dem Oligomer wird anschließend durch cyclisierende Depolymerisation ein Lactidgemisch (Rohlactid) gewonnen, das im Falle von L-Milchsäure als Rohstoff überwiegend L-Lactid enthält, daneben jedoch auch meso-Lactid und D-Lactid sowie Milchsäure und eine Reihe linearer und zyklischer Oligomere der Milchsäure. Um aus dem Rohlactid ein technisch brauchbares PLA herzustellen, müssen nicht nur Milchsäure und lineare Oligomere abgetrennt werden, sondern auch meso-Lactid und ggf. D-Lactid.

Die technische Verwendbarkeit von PLA hängt stark von dessen Schmelzpunkt und Kristallisierbarkeit ab, und diese wiederum vom seinem Gehalt an optischen Enantiomeren. Im Fall des überwiegend aus L-Milchsäureeinheiten bestehenden PLAs ("PLLA") sind dies meso-Lactid und D-Lactid. Im Falle des überwiegend aus D-Milchsäureeinheiten bestehenden PLAs ("PDLA") sind das meso-Lactid und L-Lactid. Der Gehalt von PLA an diesen optischen Isomeren wird hauptsächlich durch die Zusammensetzung des zur Polymerisation verwendeten Lactids bestimmt. Meso- und D-Lactid im L-Lactid entstehen z. B. dadurch, dass der Rohstoff L-Milchsäure mit D-Milchsäure verunreinigt ist. Ebenso gehen meso- und L-Lactid im D-Lactid auf Verunreinigung von D-Milchsäure mit L-Milchsäure zurück.

Außerdem kommt es vor allem bei der Depolymerisation des Oligomers zur teilweisen Racemisierung des überwiegend vorhandenen Lactid-Enantiomers. Der zur Depolymerisation verwendete Katalysator und die hohe Temperatur begünstigen die Racemisierung. Racemisierung wandelt L-Milchsäureeinheiten im L-Lactid zu D-Milchsäureeinheiten um. Bei Umwandlung nur einer Milchsäureeinheit im L-Lactid entsteht so meso-Lactid, bei Umwandlung beider Milchsäureeinheiten kommt es zur Bildung von D-Lactid. D-Lactid ist also ein Folgeprodukt der partiellen Racemisierung von meso-Lactid, dieses wiederum von L-Lactid. Bei den technischen Produktionsprozessen von PLA werden Prozessbedingungen angestrebt, insbesondere Verweilzeiten und Temperaturen, die die partielle Racemisierung möglichst gering halten. Deshalb ist die Konzentration des D-Lactids im Rohlactid aus diesen Prozessen stets sehr viel geringer als die des meso-Lactids.

Analoges gilt für die Racemisierung von D-Lactid zu meso- und L-Lactid. Obwohl D-Einheiten in Form von meso-Lactid oder D-Lactid im PLLA enthalten sein können, wird im Folgenden nur vom Gehalt an D-Milchsäureeinheiten gesprochen, da dieser analytisch leichter zugänglich ist.

Technisch verwendbares PLLA enthält zwischen 0% und etwa 6% D-Milchsäureeinheiten. Verschiedene Anwendungen erfordern verschiedenen Gehalt an Enantiomeren. So wird für textile Anwendungen PLLA mit 0% bis 2%, für Folien und Flaschen PLLA mit 3 bis 4% D-Einheiten verwendet, für Sonderanwendungen bis zu 6%.

PLA mit mehr als 6% D-Einheiten ist in der Regel nicht kristallisierbar, hat demzufolge keinen Schmelzpunkt, sondern einen Erweichungspunkt, der mit der Glasübergangstemperatur zusammenfällt. Ein solches PLA ist für die meisten technischen Zwecke nicht brauchbar, da es im Gegensatz zu teilkristallinem PLA keine Wärmeformbeständigkeit und Hydrolysebeständigkeit hat und die mechanischen und thermischen Eigenschaften wesentlich ungünstiger sind.

Die Grenze von 6% ist als untere Grenze zu verstehen. Es gelingt unter bestimmten Umständen, auch mit etwas höherem D-Gehalt noch kristallisierbares PLA herzustellen. Es kommt darauf an, in welcher Form die D-Einheiten im Lactid vor der Polymerisation vorliegen: D-Lactid enthält doppelt soviele D-Milchsäureeinheiten im Molekül wie meso-Lactid. Bei gleichem D-Gehalt bewirkt meso-Lactid jedoch eine stärkere Schmelzpunktsdepression im PLA als D-Lactid, führt also schon bei 6% D-Gehalt zu amorphem PLA. Ist neben meso-Lactid auch D-Lactid im Rohstoff der Polymerisation vorhanden, so steigt die Grenze des D-Gehalts, bei der amorphes PLA erreicht wird, mit zunehmendem D-Lactid-Gehalt an. Da bei der partiellen Racemisierung von L-Lactid wesentlich mehr meso-Lactid gebildet wird als D-Lactid, ist für einen PLA-Prozess, wie er der der vorliegenden Erfindung zugrunde liegt, bei etwa 8% D-Gehalt die Grenze zum amorphen PLA erreicht.

Rohlactid aus der Depolymerisation eines L-Milchsäure-Oligomers enthält etwa zwischen 8% und 15% D-Einheiten. Der Anteil variiert je nach Reinheit der als Rohstoff verwendeten Milchsäure, der Art und Menge des Depolymerisationskatalysators, dem Bauprinzip und der Anzahl der Depolymerisationsreaktoren, der Temperatur, dem Druck und der Verweilzeit bei der Depolymerisation. Um die Polymerisierbarkeit zu PLA herzustellen würde es genügen, nur Milchsäure und lineare Oligomere abzutrennen. Dieses PLA hätte bestenfalls dieselbe Konzentration an D-Einheiten wie das Rohlactid. Erfahrungsgemäß enthält dieses PLA sogar noch etwas mehr, da auch während der Polymerisation eine geringe Racemisierung stattfindet.

Aus einem PLA aus L-Lactid-Einheiten mit 8-15% D-Einheiten kann also kein technisch brauchbares PLA hergestellt werden. Hierzu müssen bei der Reinigung auch meso-Lactid und ggf. D-Lactid abgetrennt bzw. ihre Konzentration auf einen gewünschten Wert eingestellt werden. Dies führt in einem technischen Prozess zu einem oder mehreren Nebenprodukten, die meso- und D-Lactid in gegenüber dem Hauptprodukt L-Lactid aufkonzentrierter Form enthalten. Da meso- und D-Lactid nicht scharf vom Hauptprodukt L-Lactid abzutrennen sind, enthält das Nebenprodukt auch noch L-Lactid, was den Anteil an Nebenprodukt vergrößert.

Der erfindungsgemäße Prozess erhöht die Ausbeute an technisch verwendbarem PLLA in einem Verfahren der Ringöffnungspolymerisation, indem er meso- und D-Lactid-haltige Nebenprodukte für die PLA-Herstellung nutzbar macht.

Es wurde gefunden, dass ein kristallisierbares PLA entsteht, wenn polymerisiertes meso-Lactid oder eine polymerisierte meso-Lactid-reiche Fraktion (PDLLA) einem hauptsächlich aus L-Lactid bestehendem PLA (PLLA) in der Schmelze zugemischt wird. Überraschend wurde gefunden, dass ein Gemisch, das 6% bis 30% D-Milchsäureeinheiten enthält, im Wesentlichen dieselben technischen Eigenschaften hat wie das als Komponente der Mischung verwendete PLLA. Dabei sind gewisse Grenzen im Mischungsverhältnis und der Molmasse (bestimmbar über die intrinsische Viskosität IV) des PDLLA einzuhalten. Die Mischung hat im Rahmen der Messgenauigkeit den gleichen Schmelzpunkt, eher höhere Kristallisationsgeschwindigkeit, gleiche Festigkeit, Dehnung, Elastizitätsmodul, Schlagzähigkeit und Hydrolysebeständigkeit. Auch die Verarbeitbarkeit z. B. zu Fäden, Folien, tiefgezogenen Artikeln oder Spritzgussteilen wird nicht beeinträchtigt.

Dies gilt für einen Anteil des polymerisierten meso-Lactids bzw. der mesolactidhaltigen Fraktion (PDLLA) von 1% bis 50% in der Mischung, vorzugsweise von 1% bis 30%. Ein Anteil von 30% wird normalerweise nicht überschritten, wenn nur das D-haltige Nebenprodukt ein und derselben Anlage auf die erfindungsgemäße Weise verarbeitet wird. Es ist aber auch möglich, die D-haltigen Nebenprodukte von mehreren, vorzugsweise benachbarten PLA-Anlagen in einer Anlage zusammenzuführen und mit dem erfindungsgemäßen Verfahren zu verarbeiten. In diesem Falle sind PDLLA-Anteile in der Mischung von bis zu 50% möglich.

Das überwiegend aus L-Lactid-Einheiten bestehende PLLA hat dabei einen Gehalt an D-Lactid-Einheiten von 0% bis 6%. Die meso-Lactid-reiche Fraktion hat einen Anteil an meso-Lactid zwischen 15 und 100%, vorzugsweise zwischen 50 und 100%.

Die Erfindung vermag die Ausbeute an PLA in einem Verfahren erheblich zu steigern, das aus den Schritten
1. Polykondensation der Milchsäure zu einem Oligomer
2. Cyclisierende Depolymerisation des Oligomers zu Lactid
3. Reinigung des Lactids
4. Ringöffnungspolymerisation zu PLA
5. Stabilisierung und Entmonomerisierung des PLAs
besteht. Das gilt auch in einem Verfahren, das im 1. Schritt das Oligomer über eine Polyumesterung von Milchsäureestern wie Milchsäuremethyl- oderethylester erzeugt und ansonsten ebenfalls die Schritte 2. bis 5. verwendet.

Die erfindungsgemäße Ausbeutesteigerung an PLA gilt auch in einem Verfahren, das auf die Herstellung und Verkauf von polymerisationsfähigem Lactid ausgerichtet ist, das räumlich getrennt ist von der Polymerisation des Lactids. In diesem Fall werden beide gereinigten Lactidfraktionen in geeigneter Form zwischengelagert, zum Standort der Polymerisation transportiert, dort getrennt voneinander zu PLLA und PDLLA polymerisiert und die beiden Polymere miteinander in der Schmelze gemischt.

Die Reinigung des Lactids erfolgt dabei durch Rektifizieren oder durch Umkristallisieren aus der Schmelze oder aus einer Lösung. Auch Kombinationen aus Rektifikation und Umkristallisation eignen sich für diesen Zweck, siehe z. B. WO 2009/030395 A1.

Die genannten Reinigungsmethoden werden so betrieben, dass dabei eine erste, überwiegend L-Lactid enthaltende Fraktion entsteht, sowie eine zweite Fraktion, die 15 bis 100% meso-Lactid enthält. Dieser zweiten Fraktion können weitere, unter Umständen in der Reinigung entstehende Fraktionen zugeschlagen werden, die D-Lactid und/oder meso-Lactid in gegenüber der ersten Fraktion angereicherter Form enthalten.

Sowohl die Rektifikation als auch die Umkristallisation bieten mehrere Möglichkeiten, Menge und Zusammensetzung der beiden Fraktionen zu beeinflussen und auf gewünschte Werte einzustellen. Die Einstellbarkeit findet ihre natürlichen Grenzen in den Massenbilanzen, hier insbesondere der Enantiomeren des Lactids. Z. B. führt eine höhere Reinheit der ersten Fraktion bezüglich L-Lactid zwangsläufig zu einer geringeren Ausbeute an dieser Fraktion sowie zu einer Verschiebung des meso-Lactids in die zweite Fraktion, deren Menge dabei zunimmt.

So wird die erste Fraktion je nach dem beabsichtigten Verwendungszweck des daraus hergestellten PLLAs auf einen D-Gehalt zwischen 0 und 6% eingestellt, wobei der D-Anteil aus meso- und/oder D-Lactid besteht und berechnet wird durch Addition des D-Lactid-Anteils und des halben meso-Lactid-Anteils. Die Zusammensetzung der zweiten Fraktion ist dann nicht mehr so frei wählbar wie die der ersten Fraktion. Sie ist begrenzt durch die Zusammensetzung des Rohlactids, durch die Massenbilanz der Lactid-Enantiomere und die Trennschärfe der verwendeten Reinigungsmethoden. Sie kann in den genannten Grenzen noch durch die Auslegung und Fahrweise der Rektifikation und/oder der Umkristallisation beeinflusst werden. Die zweite Fraktion kann so einen meso-Lactid-Gehalt zwischen 15% und 100% annehmen, wobei der Bereich zwischen 50 und 100% bevorzugt ist. Der Rest besteht aus L- und D-Lactid.

Bei der Reinigung stellt man vorteilhafterweise den Carboxylgruppengehalt der zweiten, meso-Lactid-haltigen Fraktion auf einen Wert unterhalb von 10 mmol/kg, bevorzugt unterhalb von 5 mmol/kg, besonders bevorzugt unterhalb von 3 mmol/kg ein. Mit dieser Reinheit kann die Fraktion durch Ringöffnungspolymerisation mit einem geeigneten Katalysator auf eine I.V. von 0,8 bis 1,80 gebracht werden. Geeignete Katalysatoren sind dieselben wie für die Polymerisation von L-Lactid in der Schmelze.

Die erste, überwiegend L-Lactid enthaltende Fraktion wird in bekannter Weise durch Ringöffnung bis zu einer I.V. zwischen 1,0 und 2,0 polymerisiert (siehe z. B. WO 2009/030397 A1).

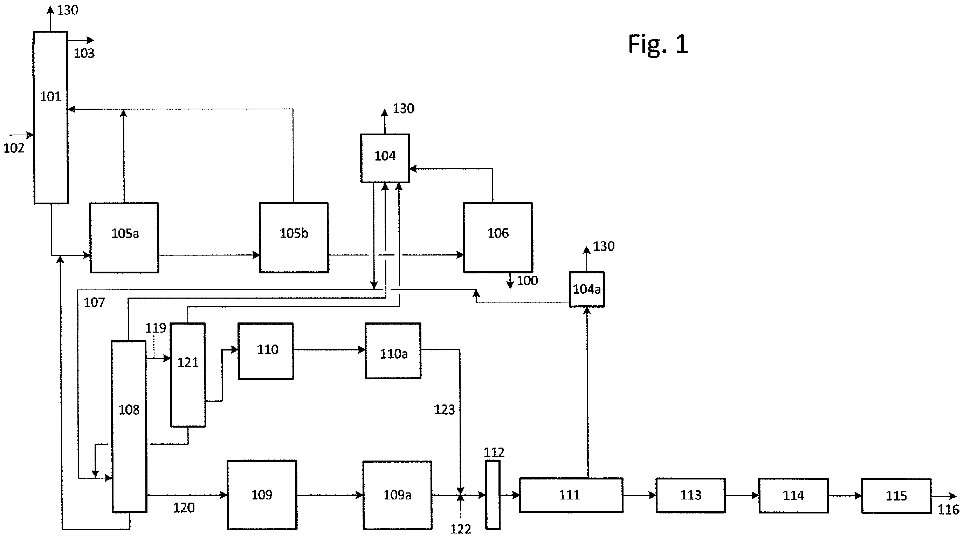

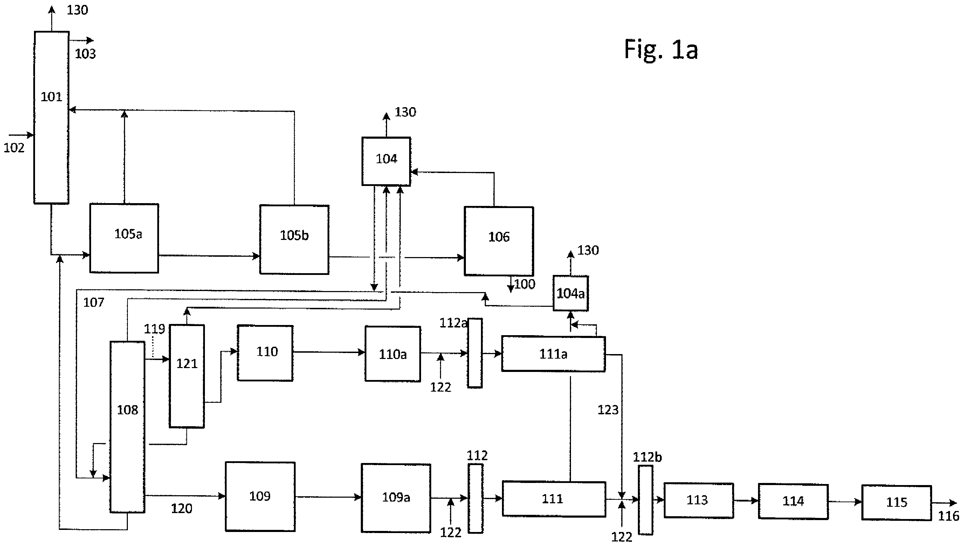

Figur 1 zeigt ein Schema eines kontinuierlichen Gesamtprozesses der Herstellung der Poly-Lactidmischung (PLA) ausgehend von Milchsäure. Das Verfahren untergliedert sich dabei in die folgenden Teilschritte, die nachfolgend im Einzelnen vorgestellt werden.

### 1. Aufkonzentration von Milchsäure

Das Ausgangsmaterial für den Prozess ist Milchsäure bzw. eine wässrige Lösung von Milchsäure. Dabei sollte der Gehalt an Milchsäure höher als 80 Gew.-% sein. Vorzugsweise beträgt dabei die Milchsäurekonzentration mehr als 90%, weil das Wasser vor der Polymerisation entfernt werden sollte. Die Trennung von Wasser und Milchsäure wird dabei in einer Rektifikationssäule 101 vorgenommen. Dabei wird über einen Absaugstutzen 130 Vakuum angelegt, das dampfförmig anfallende Wasser wird kondensiert und über einen weiteren Stutzen 103 kopfseitig entnommen. Die Zuführung der Milchsäure erfolgt dabei kontinuierlich über einen weiteren Stutzen 102. Das Destillat ist reines Wasser, das sumpfseitig anfallende Produkt ist Milchsäure mit einer Konzentration von mehr als 99 Gew.-%.

Neben der Abtrennung von Wasser aus dem Ursprungsmaterial (Milchsäure) dient die Rektifikationssäule 101 ebenso zur Trennung der Dämpfe aus den Präkondensations-Reaktoren 105a und 105b. Die Dampfströme bestehen dabei aus Milchsäure, Lactoylmilchsäure, Dilactid und Wasser. Das Wasser wird kopfseitig abgezogen, Milchsäure und ihre Derivate gehen in den Sumpf der Rektifikationssäule 101 und von dort zusammen mit der aufkonzentrierten Milchsäure in den ersten Polykondensations-Reaktor 105a.

### 2. Polykondensation

Die aufkonzentrierte Milchsäure wird in einer Serie von zwei Reaktoren 105a und 105b durch Polykondensation in ein Präpolymer oder Oligomer überführt. Die Polykondensation läuft unter zwei verschiedenen Drücken und Temperaturen ab, um den Reaktionsumsatz zu optimieren. Im ersten Reaktor 105a sind die Konditionen so gewählt, dass die Verdampfung von Milchsäure minimiert ist und gleichzeitig die Entfernung von Wasser erleichtert wird. Im zweiten Schritt der Polykondensation ist die Reaktionsgeschwindigkeit durch eine höhere Temperatur erhöht, gleichzeitig wird der Druck vermindert, um die Wasserkonzentration in der Schmelze weiter zu mindern. Die mittlere Molmasse (Zahlenmittel) des Präpolymers liegt dabei zwischen 500 und 2.000 g/mol.

### 3. Cyclisierende Depolymerisation

Das Präpolymer steht in chemischem Gleichgewicht mit dem cyclischen Dimer der Milchsäure, dem Dilactid. Durch Einstellung von Druck und Temperatur im Depolymerisationsreaktor 106 ist gewährleistet, dass das Lactid kontinuierlich aus dem Präpolymer gebildet wird und verdampft. Dabei verbleibt ein geringer Anteil an nicht umgesetztem Rückstand 100, der verworfen wird. Der Dampfstrom aus dem Depolymerisationsreaktor 106 besteht hauptsächlich aus Lactid. Wasser, Milchsäure und deren lineare Oligomere sind nur in untergeordneten Mengen vorhanden. Zum Depolymerisationsreaktor 106 gehört ein Kondensator 104, der die Reaktionsbrüden teilweise kondensiert: Wasser und der größte Anteil an Milchsäure bleiben dabei dampfförmig und verlassen die Kondensationsvorrichtung 104 unkondensiert. Das Kondensat aus dem Depolymerisationsreaktor 106 enthält zuvorderst das Lactid, Lactoylmilchsäure (das lineare Dimer der Milchsäure) und höhere lineare und zyklische Oligomere. Das Kondensat wird auch als Roh-Lactid bezeichnet. Lactid liegt in drei stereoisomeren Formen vor: das optisch aktive L-Lactid und D-Lactid sowie das optisch nicht aktive meso-Lactid, aus einer Kombination einer L- und D-Milchsäureeinheit . Für den Fall, dass beispielsweise von L-Milchsäure ausgegangen wird, stammen die D-Einheiten ggf. teils aus dem Edukt (da dieses z.B. einen geringen Prozentsatz an D-Milchsäure aufweist), teils werden sie durch Racemisierung von L-Einheiten während der Präpolymerisation und der Depolymerisation gebildet.

### 4. Lactid-Reinigung

Während der Ringöffnungspolymerisation hängt das erreichbare Molekulargewicht und somit bedeutende mechanische Eigenschaften des Polylactids vom Reinheitsgrad des Lactids ab. Die Hydroxyl-Gruppen der als Verunreinigung enthaltenen Milchsäure und Lactoylmilchsäure dienen dabei als Ausgangspunkt der Polymerisation. Je höher die Konzentration der Hydroxyl-Gruppen im Lactid ist, desto geringer fällt das erreichbare Molekulargewicht des Polymers aus. Die Konzentration der Hydroxyl-Gruppen im Rohlactid ist nach der cyclisierenden Depolymerisation ggf. zu hoch. Das in der Kondensationsvorrichtung 104 kondensierte Roh-Lactid wird über eine entsprechende Leitung 107 einer Reinigungsvorrichtung 108 zugeführt. Eine geeignete Reinigungsvorrichtung ist beispielsweise eine aus der WO 2009/030395 A1 bekannte Trennwandkolonne. Mit dieser kann eine Separierung des Roh-Lactids beispielsweise in eine meso-Lactid-reiche Fraktion und eine L-Lactid-reiche Fraktion ermöglicht werden. Die meso-Lactid-reiche Fraktion wird dabei am kopfseitigen Abzug 119, die L-Lactid-reiche Fraktion am bodenseitigen Abzug 120 entnommen. Bevorzugt wird die meso-Lactid-reiche Fraktion mit einer weiteren Rektifikationskolonne 121 (ebenfalls in der WO 2005/030395 A1 beschrieben) weiter aufgereinigt. Kopfseitige Ströme, die gegebenenfalls noch Milchsäure bzw. Wasser etc. enthalten können, werden dabei dem Kondensator 104 zugeführt, sumpfseitig anfallende Fraktionen entweder der Präkondensationsreaktoren 105 oder erneut in die Trennwandkolonne 108 aufgegeben.

### 5. Ringöffnungspolymerisation

Gemäß dem erfindungsgemäßen Verfahren ist vorgesehen, dass die beiden erhaltenen Lactid-Fraktionen jeweils einer separaten Ringöffnungspolymerisation zugeführt werden. Die L-Lactid-reiche Fraktion wird dabei in einem Polymerisationsreaktor 109, 109a, die meso-Lactid-reiche Fraktion in einem separaten Polymerisationsreaktor 110, 110a einer Ringöffnungspolymerisation unterworfen.

Die Ringöffnungspolymerisation wird in jeweils einem Reaktor unternommen, der aus einer Kombination eines Rührkessels 109 bzw. 110 und eines Rohrreaktors 109a bzw. 110a gebildet ist. Im Rührkessel 109 bzw. 110 wird das niedrigviskose Lactid zu PLA mit einer Umsetzungsrate von ca. 50% polymerisiert. Katalysator und Additive werden homogen in die Schmelze eingemischt.

Im Rohrreaktor 109a bzw. 110a wird die Polymerisationsreaktion so lange fortgeführt, bis ein chemisches Gleichgewicht zwischen Polymer und Monomer erreicht wird. Die maximale Umsetzung des Monomers beträgt ca. 95%. Während der Polymerisation erhöht sich die Viskosität auf ca. 10.000 Pa·s.

Gemäß der in Figur 1 dargestellten Ausführungsform ist nunmehr vorgesehen, dass die beiden erhaltenen Poly-Lactid-Schmelzen direkt den jeweiligen Rohrreaktoren 109a bzw. 110a entnommen werden und unmittelbar, d.h. im schmelzflüssigen Zustand miteinander vermischt werden. Hierzu wird beispielsweise der dem Reaktor 110a entnommene Strom 123 mit dem dem Reaktor 109a entnommenen Polymerschmelzestrom kombiniert.

Der kombinierten Schmelze kann ein geeigneter Deaktivator 122, beispielsweise Phosphorsäure in geeigneter Konzentration zugegeben werden. Bevorzugt vor oder während des Vermischens der beiden Ströme werden auch Stabilisatoren zugesetzt, insbesondere ein Deaktivator für den Polymerisationskatalysator. Falls erwünscht werden an dieser Stelle weitere Additive zugesetzt, z.B. Endgruppenstabilisatoren, Nukleierungsmittel, Kristallisationsbeschleuniger, Farbstoffe, Stabilisatoren gegen thermischen, oxidativen und hydrolytischen Abbau. Stabilisatoren und Additive können jedoch auch nach dem Vermischen der beiden Polymerströme zugesetzt werden.

Eine vollkommene Homogenisierung der Polymerschmelze wird durch einen stromabwärts angeordneten statischen Mischer 112 ermöglicht. Die Verweilzeit der Schmelze im Mischer kann zwischen 1 und 20 Minuten betragen, wobei 3 bis 10 Minuten bevorzugt sind.

Anschließend wird die Schmelze im Vakuum entmonomerisiert und granuliert, wobei dafür bekannte Apparate und Maschinen zur Anwendung kommen, z.B. Entgasungsextruder.

### 6. Entmonomerisierung

Um ein stabiles Polylactid zu erhalten, ist die Monomerkonzentration von ungefähr 5 Gew.-% in der Schmelze zu hoch. Deswegen sollte eine Entmonomerisierung durchgeführt werden. Dies wird durch eine Entgasung der Schmelze z.B. in einem Doppelschneckenextruder 111 erreicht.

Der Doppelschneckenextruder 111 ist dabei ans Vakuum 130 angeschlossen, dazwischen kann eine weitere Kondensationsvorrichtung 104a angeordnet sein, um die Monomere rückzugewinnen.

Aufgrund der Tatsache, dass die Ringöffnungspolymerisation eine Gleichgewichtsreaktion ist, wird bevorzugt ein Stabilisator vor der Entmonomerisierung zugegeben, um die Rückbildung des Monomers während und nach der Entgasung zu verhindern.

### 7. Granulierung und Kristallisation

Anschließend an die Entmonomerisierung wird die Schmelze dem Extruder 111 entnommen und in eine Granuliervorrichtung 113 überführt. Dabei können sowohl Stranggranulation als auch Unterwasser-Granulation durchgeführt werden. In beiden Fällen muss das PLA-Granulat vor der Trocknung und der Verpackung kristallisiert werden. Die Kristallisation 114 wird bei erhöhten Temperaturen und unter Rühren durchgeführt, solange bis das Granulat nicht mehr aneinander klebt.

Abschließend kann in einer geeigneten Trocknungsvorrichtung 115 ein Trocknen des Granulates erfolgen, das fertige Produkt 116 kann dem Trockner 115 entnommen werden. Ein Granulattrockner, z.B. ein Schachttrockner mit gerührter Kristallisationszone gemäß USP 5,558,678, kristallisiert und trocknet das Granulat, das danach zur Weiterverarbeitung zur Verfügung steht. Das entstandene Produkt 116 ist teilkristallin und enthält dabei 6-30% D-Milchsäureeinheiten.

Gemäß dieser bevorzugten Ausführungsform der Erfindung werden die beiden Fraktionen separat voneinander polymerisiert, z. B. in zwei parallelen, voneinander getrennten Linien einer Polymerisationsanlage. Beide Polymerströme, die nach der Polymerisation noch nicht umgesetztes Lactid enthalten, werden zusammengeführt und miteinander vermischt, z. B. in einem statischen Mischer.

In den nachfolgenden Figuren bezeichnen die gleichen Bezugszeichen die gleichen Bestandteile wie in Figur 1. Zur Vermeidung von Wiederholungen sei bezüglich des prinzipiellen Verfahrensablaufs auf die Ausführungen zu Figur 1 verwiesen.

Die in Figur 1a dargestellte, alternative Ausführungsform verläuft prinzipiell bis zur Polykondensation identisch mit der Verfahrensführung wie in Figur 1 dargestellt. Im Unterschied zur Verfahrensführung gemäß Figur 1 findet jedoch eine separate Desaktivierung 122 der einzelnen Polymerströme, die aus den Reaktoren 109a bzw. 110a stammen, statt. Ebenso findet eine separate Einmischung des Desaktivators bei 112 bzw. 112a sowie eine separate Entmonomerisierung 111 bzw. 111a statt. Erst im Anschluss daran werden die beiden Polymerströme bei 123 vereinigt, ggfs. können auch weitere Additive bei 122 zugegeben werden. Bevorzugt wird vor Aufgabe des Polymerstroms in die Granuliervorrichtung 113 erneut eine Homogenisierung durch ein weiteres statisches Mischelement 112b durchgeführt.

Auch hier entsteht das teilkristalline Produkt 116 mit einem Gehalt an D-Milchsäureeinheiten von 6-30%.

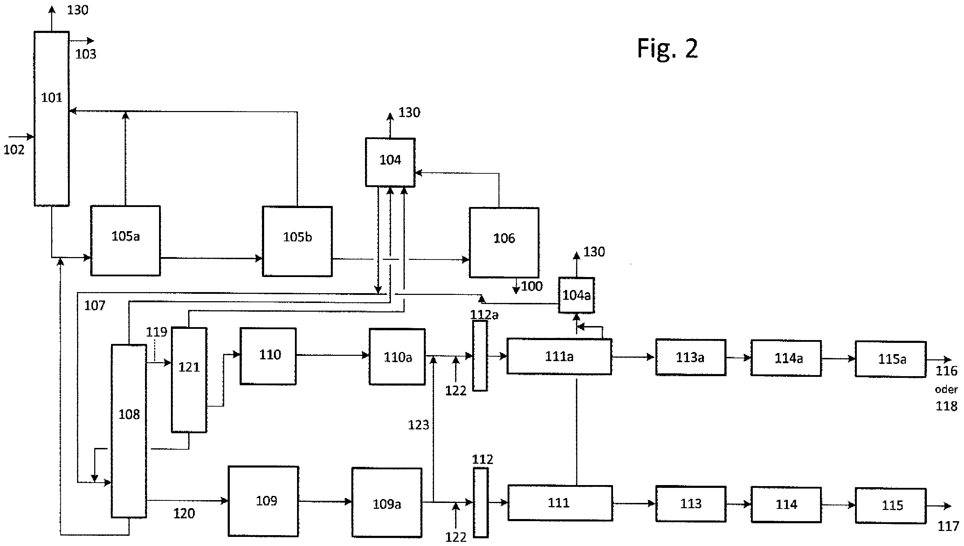

In einer weiteren bevorzugten Ausführungsform der Erfindung (Fig. 2) wird nur ein Teil 123 der ersten überwiegend L-Lactid enthaltenden Fraktion 109a nach der Polymerisation mit der polymerisierten, an meso-Lactid reichen zweiten Fraktion 110a vermischt. Die Mischung und der unvermischte Teilstrom werden separat entmonomerisiert, granuliert, kristallisiert, getrocknet und verpackt. Eine Anlage, die nach dieser Ausführungsform arbeitet, kann zwei verschiedene Produkttypen zur selben Zeit erzeugen: ein PLLA 117 mit 0-6% D-Gehalt und ein teilkristallines PLA 116 mit 6-30% D-Gehalt gemäß der Erfindung. In dem Fall, dass der zur Mischung mit dem PDLLA-Strom abgezweigte Teilstrom gegen Null geht, kann mit einer Anlage nach Ausführungsform 2 neben dem PLLA anstelle des erfindungsgemäßen teilkristallinen PLAs 116 auch das amorphe PDLLA 118 hergestellt werden. Dabei ist die Kristallisation 114a nicht wirksam.

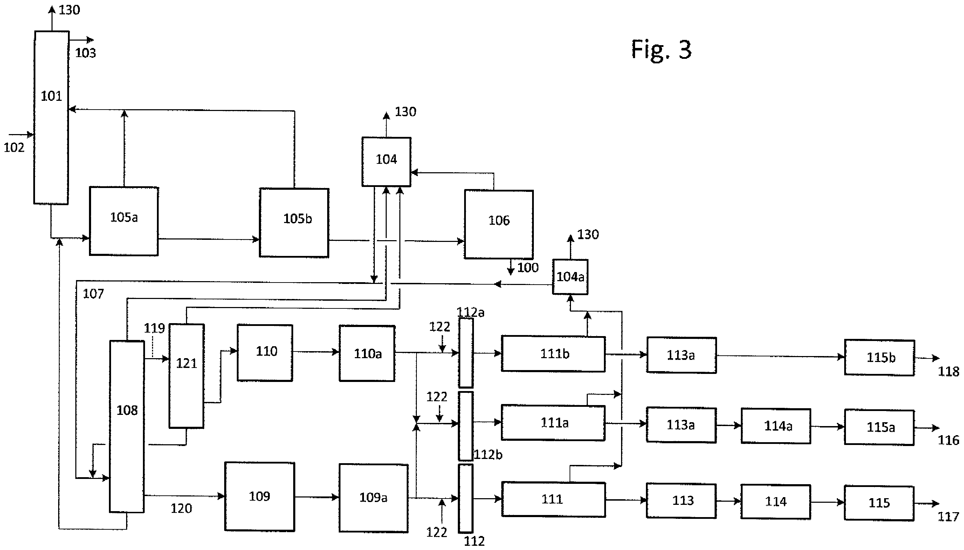

In einer weiteren Ausführungsform der Erfindung (Fig. 3) wird ein Teil der zweiten, meso-Lactid-reichen Fraktion nach der Polymerisation 110a mit einem Teil der polymerisierten ersten, überwiegend aus L-Lactid bestehenden Fraktion 109a vermischt, entmonomerisiert, kristallisiert, getrocknet und verpackt. Die beiden unvermischten Teilströme der polymerisierten ersten und zweiten Fraktion werden getrennt davon und getrennt voneinander entmonomerisiert. Der kristallisierbare Teilstrom (in Figur 3 die mittlere Produktlinie) wird auf dieselbe Weise weiterverarbeitet wie in der Ausführungsform nach Fig. 1 beschrieben. Der nicht kristallisierfähige Teilstrom aus der polymerisierten meso-Lactid-reichen Fraktion bildet nach Granulierung ein amorphes Granulat, das unterhalb seines Erweichungspunkts (Glasübergangspunkt) getrocknet und verpackt wird. Es eignet sich für spezielle Anwendungen, in denen ein niedriger Schmelzpunkt erwünscht ist, z. B. für heißsiegelbare Folien. Eine Anlage, die nach dieser Ausführungsform arbeitet, kann drei verschiedene Produkttypen zur selben Zeit erzeugen: ein PLLA 117 nach dem Stand der Technik, ein amorphes PDLLA 118 mit 6-60% D-Anteil mit einem Erweichungspunkt unter 60°C, und ein teilkristallines PLA 116 mit 6-30% D-Anteil.

In allen Ausführungsformen der Figuren 1, 1a, 2 und 3 kann die PLA-Schmelze auch ohne Granulieren etc. direkt der Weiterverarbeitung, z. B. zu Fasern, Folien oder Spritzgussartikeln zugeführt werden. Ob diese Direktverarbeitung gewählt wird hängt in erster Linie davon ab, ob die Kapazität der Polymerisationsanlage mit der Kapazität der Verarbeitungsanlage übereinstimmt. In den meisten Fällen wird die Kapazität der Polymerisation jedoch wesentlich größer sein als die der Verarbeitung, so dass der Weg über das Granulat bevorzugt wird. Es ist jedoch möglich, nur einen Teil der Kapazität der Polymerisationsanlage direkt aus der Schmelze zu verarbeiten und die restliche Kapazität einer Granulierung zuzuführen.

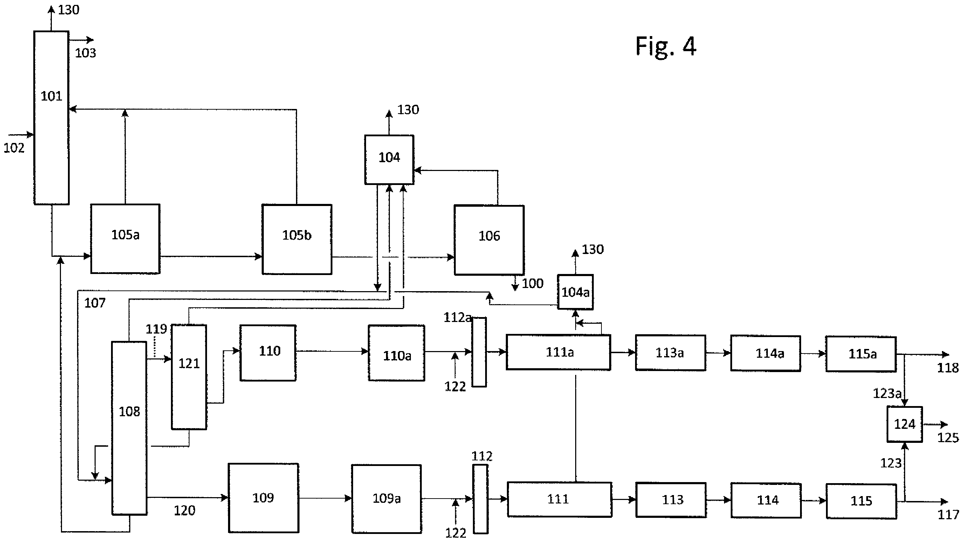

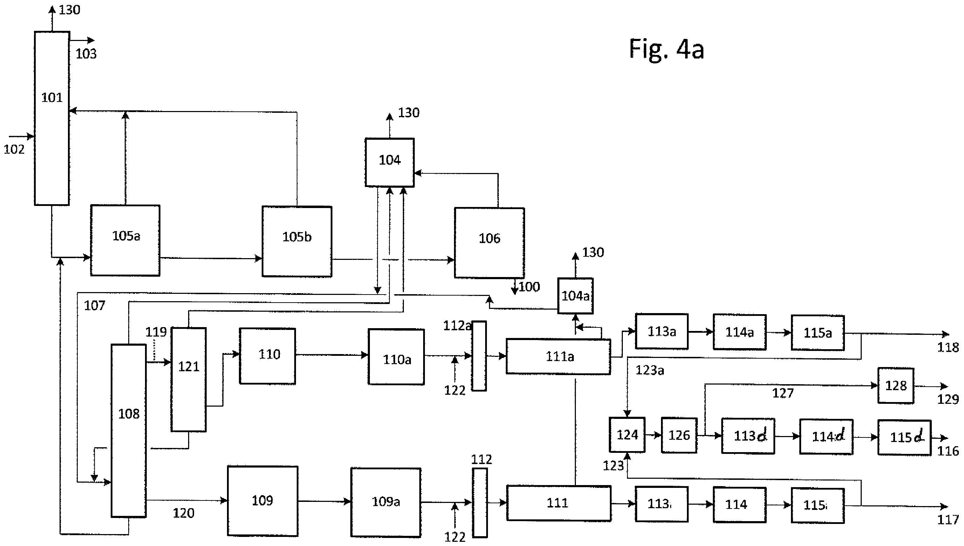

In einer weiteren Ausführungsform werden die beiden Polymerströme nach Fig. 4 getrennt voneinander polymerisiert, stabilisiert, entmonomerisiert, granuliert und getrocknet. Anschließend werden die Granulate in einem Granulatmischer 124 miteinander gemischt. Ggf. nach Zwischenlagerung kann die Granulatmischung 125 zum Verarbeiter transportiert, dort aufgeschmolzen und homogenisiert werden. Die Schmelze wird dann z. B. zu Fasern, Folien oder Spritzgussartikeln weiterverarbeitet.

Alternativ bzw. auch gleichzeitig können die beiden granulierten PLA-Typen 117 und 118 getrennt zum Ort der Weiterverarbeitungsanlage transportiert werden und dort gemischt, in einem Extruder aufgeschmolzen und homogenisiert und zu Folien, Fasern oder Spritzgussartikeln verarbeitet werden.

Das Mischen der beiden granulierten Fraktionen kann also wahlweise schon am Ort der Polymerherstellung oder am Ort der Weiterverarbeitung geschehen. Die erfindungsgemäßen Eigenschaften des Gemisches werden jedoch erst nach Aufschmelzen, Mischen und Homogenisieren in der Schmelze erreicht.

Die erfindungsgemäße Mischung der beiden PLA-Typen kann nach Fig. 4a noch in der PLA-Produktionsanlage hergestellt werden. Dabei werden die Granulate 117 und 118 im gewünschten Mengenverhältnis (durch Einstellen bzw. Regulieren der Ströme 123 und 123a) miteinander vermischt 124, gemeinsam aufgeschmolzen 126 und homogenisiert. Die Schmelze wird anschließend wieder granuliert 113d, kristallisiert 114d, getrocknet 115d und das erfindungsgemäße Granulat 116 zum Ort der Weiterverarbeitung transportiert. Es ist jedoch auch eine Direktverarbeitung 128 der Schmelze 127 z. B. zu Fasern, Folien und Spritzgussartikeln 129 möglich.

Diese Ausführungsform hat Vorteile, wenn das Mengenverhältnis bei der Mischung der beiden Teilströme frei wählbar sein soll. Der kleinere Teilstrom, die polymerisierte meso-Lactid-reiche Fraktion, kann als Granulat bequem und ohne Qualitätsverlust zwischengelagert werden. Auf diese Weise können mit geringerem apparativen Aufwand als bei der Ausführungsform nach Fig. 3 drei verschiedene PLA-Typen erzeugt werden: ein PLLA 117 nach dem Stand der Technik mit 0-6% D-Anteil, ein teilkristallines PLA 116 nach der vorliegenden Erfindung mit 6-30% D-Anteil und ein amorphes PLA mit 6-60% D-Anteil 118 für spezielle niedrigschmelzende Anwendungen.

Diese Ausführungsform kann auch dann vorteilhaft sein, wenn in der Anlage nur ein Polymerisationsstrang zur Verfügung steht. Dieser wird abwechselnd für die Polymerisation der ersten und der zweiten Lactid-Fraktion benutzt, wobei die gerade nicht polymerisierte Fraktion zwischengelagert wird. Die Lactid-Fraktionen können in flüssiger Form (wie z.B. in EP 2 161 263 A1 beschrieben) oder, nach Granulierung, in fester Form zwischengelagert werden.

Die in den Figuren 1 bis 4 dargestellten Prozesse sind als Beispiele zu verstehen, besonders was die Art und Anordnung der Reinigungsvorrichtungen und Mischer und den Ort für die Zugabe von Stabilisatoren und Additiven betrifft. Alle anderen Arten und Anordnungen von Reinigungsvorrichtungen sowie alle geeigneten Orte für die Zugabe von Stabilisatoren und Additiven, die den Zweck der Erfindung erfüllen, sind hier eingeschlossen.

Die erfindungsgemäße PLA-Mischung mit einem D-Gehalt von 6,0 bis etwa 30% kann in gleicher Weise verwendet werden wie ein PLLA mit einem D-Gehalt zwischen 0% und 6,0%, d. h. also zur Herstellung von transparenten oder opaken Verpackungsartikeln, wie ungereckten und mono- oder biaxial gereckten Folien, tiefgezogenen Folien, Flaschen, und von spritzgegossenen Teilen, Fasern und Fäden.

Für die nachfolgenden Beispiele werden die angegebenen analytischen Methoden eingesetzt.

### Analytische Methoden

### 1. Schmelzpunktbestimmung an PLA mit der DSC-Methode

In einem DSC-Gerät DSC 7 von Perkin Elmer wird die abgewogene Probe mit einer Aufheizgeschwindigkeit von 5 K/min von 0°C auf 250°C erhitzt, auf 0°C abgekühlt und ein zweites Mal auf 250°C erhitzt. Die auftretenden endo- oder exothermen Wärmeeffekte werden über der Temperatur aufgezeichnet und charakteristische Größen, wie Schmelzpunkt, Glasübergangspunkt, Schmelzenthalpie mit der geräteinternen Software ausgewertet. Schmelzpunkt und Glasübergangstemperatur werden beim 2. Aufheizvorgang genommen.

### 2. Bestimmung des Kristallinitätsgrads nach der DSC-Methode

Die Probe wird wie unter 1. beschrieben behandelt. Zur Berechnung des Kristallinitätsgrads wird die beim 1. Aufheizvorgang gemessene Schmelzenthalpie der Probe durch die Schmelzwärme der reinen kristallinen Phase (100% kristallines PLA) dividiert. Diese beträgt 91 +/- 3 J/g nach M. Pyda et al., J. Chem. Thermodynamics 36 (2004) 731. Der Kristallinitätsgrad ist der Quotient aus Schmelzenthalpie der Probe und des zu 100% kristallinen PLAs.

### 3. Bestimmung der Konzentration von L-, D-, und meso-Lactid in einer Lactidmischung

Die Lactid-Probe wird in einem Gemisch aus 90/10 ml/ml n-Hexan/Ethanol gelöst. Die gelösten Komponenten werden mit HPLC auf einer chiralen Säule getrennt und mit einem UV-Detektor bei 223 nm analysiert.

### 4. Bestimmung des Gehalts an L- und D-Milchsäureeinheiten in PLA und Lactid

Eine Probe aus PLA oder einem PLA-Oligomer wird mit 1-n Natronlauge am Rückfluss siedend hydrolysiert und nach Abkühlen neutralisiert. Die neutralisierte Probe wird mit 3 millimolarer Kupfersulfatlösung im Verhältnis 1/9 ml/ml vermischt und mit HPLC auf einer stereospezifischen Säule in die Komponenten getrennt, die anschließend mit einem UV-Detektor bei einer Wellenlänge von 238 nm analysiert werden.

### 5. Bestimmung der Molmassen und der Polydispersität mit Gelchromatographie

Es wurde eine GPC-Apparatur von WEG Dr. Bures verwendet, mit den Säulen PLgel 5µm 100.000, PLgel 5 µm 10.000, PLgel 5 µm 100 und einem Brechungsindex-Detektor. Lösungsmittel war Dichlormethan. Zahlenmittel und Gewichtsmittel der Molmasse sowie die Polydispersität wurde mit der Software ParSEC Chromatography ausgewertet.

### 6. Bestimmung der intrinsischen Viskosität (I.V.) von PLA

Die abgewogene Polymermenge wird in einem definierten Volumen Chloroform gelöst. In einem Ubbelohde-Kapillarviskosimeter, das sich in einem auf 20°C +/- 0,1°C eingestellten thermostatisierten Wasserbad befindet, wird die Durchlaufzeit der Lösung und des reinen Lösungsmittels gemessen. Der Quotient aus beiden ist die relative Lösungsviskosität. Sie wird mit der Einpunktmethode nach J. Dorgan et al., J. Polym. Sci.: Part B: Polym. Physics, Vol. 43,3100-3111 (2005), in die intrinsische Viskosität (I.V.) umgerechnet.

### 7. Bestimmung der Carboxylgruppenkonzentration von Lactid

Die Lactidprobe wird in Methanol gelöst. Anschließend wird die Lösung bei 20°C mit 0,1 N benzylalkoholischer KOH-Lösung titriert. Der Endpunkt wird potentiometrisch erfasst.

### 8. Thermisch induzierte Kristallisation von PLA-Granulat

10 g PLA-Granulat, mit einem maximalen Einzelkorngewicht von 30 mg, das sich im amorphen Zustand befindet, wird im Vakuum-Trockenschrank bei 120°C und einem Druck unter 1 mbar 24 h lang kristallisiert. Nach Abkühlen der Probe wird der Kristallinitätsgrad mit DSC gemessen (siehe 2.).

### Beispiele

### Beispiel 1: Erfindungsgemäße Herstellung der Mischung

Eine kontinuierliche Pilotanlage zur Herstellung von PLA-Granulat aus Milchsäure ist gemäß Fig.1 aufgebaut:
Milchsäure mit 10% Wasseranteil (102) wird in einer Rektifizierkolonne entwässert. Die etwa 100%ige Säure geht in eine zweistufige Reaktorkaskade (105 a, 105 b), in der durch Polykondensation ein Oligomer mit einer Molmasse von 800 Da entsteht. Das chemisch gebildete Wasser verdampft dort unter Vakuum zusammen mit einem Teil der nicht umgesetzten Milchsäure. Zur Rückgewinnung der Milchsäure geht der Dampf zurück in die Rektifizierkolonne 101. Dort wird das am Kopf anfallende Wasser (103) aus dem Prozess entfernt. Das Oligomer aus 105 b geht in einen weiteren Reaktor 106, wo unter dem Einfluss von Temperatur und eines Katalysators durch cyclisierende Depolymerisation Lactid entsteht, das im Vakuum verdampft und in einem Kondensator 104 verflüssigt wird. Reste an Milchsäure und Wasser werden dabei abgetrennt (103). Bei der Depolymerisation entsteht ein Rückstand, der neben Oligomeren der Milchsäure thermische Abbauprodukte enthält. Dieser Rückstand wird über die Entnahmemöglichkeit 100 entnommen und verworfen.

Das durch cyclisierende Depolymerisation erzeugte Rohlactid 107 enthält 82,4 % L-Lactid, 3,4 % D-Lactid und 14,2 % meso-Lactid. Der Gehalt an Milchsäure und linearen Oligomeren wird durch die Caboxylgruppenkonzentration erfasst, die hier 140 mmol/kg beträgt. Die Reinigung des erzeugten Rohlactids geschieht in einer Rektifizierkolonne 108, die in WO 2009/030395 A1 näher beschrieben ist. Der Druck am Kopf der Kolonne beträgt 22 mbar. Rohlactid wird auf einer mittleren Höhe zugeführt. Am Kopf der Kolonne fallen die niedrigsiedenden Bestandteile des Rohlactids an, vor allem Reste von Wasser und Milchsäure. Im Kolonnensumpf sammeln sich lineare und höhere zyklische Oligomere der Milchsäure. Diese gehen zurück in die Polkondensation 105a. Die überwiegend L-Lactid enthaltende Fraktion wird als Seitenstrom 120 entnommen. Sie enthält 93,4 % L-Lactid, der Rest besteht aus 3,1% D- und 3,5% meso-Lactid. Die Carboxylgruppenkonzentration beträgt 11 mmol/kg, womit die Fraktion ohne weitere Reinigung polymerisiert wird. Das geschieht nach Zugabe von des Katalysators Zinn(II)-octoat in einer Reaktorkaskade bestehend aus zwei kontinuierlich betriebenen Reaktoren 109 und 110. Die Polymerisation wird bei einer Endtemperatur von 185 °C bis zu einer I.V. von 1,85 und einem Umsatz von 97,5 % geführt.

Die mit meso-Lactid angereicherte Fraktion 119 wird ebenfalls als Seitenstrom aus Kolonne 108 entnommen, wobei die Entnahmestelle entsprechend dem gegenüber L-Lactid niedrigeren Siedepunkt von meso-Lactid oberhalb der Entnahmestelle der L-Lactid-Fraktion 117 angeordnet ist. Diese zweite Fraktion enthält 50,6 % meso-Lactid und 47,6% L-Lactid. Daneben enthält sie aufgrund ihrer größeren Nähe zum Kolonnenkopf noch 20 mmol/kg Carboxylgruppen.

Diese Fraktion wird in einer zweiten Rektifizierkolonne 121 weiter aufgetrennt. Die Kolonne arbeitet bei einem Druck von 15 mbar am Kopf. Eine polymerisationsfähige Fraktion wird als Seitenstrom entnommen. Sie enthält 56,7 % meso-Lactid neben 42,0 % L-Lactid und 1,3 % D-Lactid. Die Konzentration der Carboxylgruppen beträgt 6 mmol/kg. Diese Fraktion wird in einer Reaktorkaskade aus zwei kontinuierlich durchströmten Reaktoren bei einer Endtemperatur von 150°C bis zu einem Restmonomergehalt von 4% und einer I.V. von 0,95 g/dl polymerisiert. Als Polymerisationskatalysator dient Zinn(II)-octoat.

Dieser Schmelzestrom wird mit dem Schmelzestrom aus der Polymerisation der überwiegend L-Lactid enthaltenden Fraktion zusammengeführt und durch einen statischen Mischer 112 gedrückt. Der Anteil des aus überwiegend meso-Lactid hergestellten Schmelzestoms in der Mischung beträgt 12%. Vor dem statischen Mischer wird der Schmelze Phosphorsäure als Deaktivator für den Katalysator zugegeben. Anschließend wird die Schmelze im Vakuum entmonomerisiert (111) und in einer Granuliermaschine unter Abschrecken mit Wasser zu Granulat verarbeitet. Das Granulat wird in einem kontinuierlichen Schachttrockner mit Kristallisierzone (114) bei 120 °C kristallisiert und getrocknet (115) und nach Abkühlung auf unter 50°C verpackt. Das in der Vakuum-Entmonomerisierung abgetrennte Lactid wird nach Kondensation (103) in die Kolonne 108 zurückgeführt.

Das Granulat hat einen Schmelzpunkt von 161,2°C, einen D-Gehalt von 8,4% und einen Kristallinitätsgrad (DSC, Methode siehe Anhang) von 36,7%.

Die molare Ausbeute an teilkristallinem PLA-Granulat, bezogen auf die eingesetzte Milchsäure beträgt in diesem Beispiel 95,0 % des theoretischen Wertes (mol Milchsäureeinheiten im PLA pro mol eingesetzter Milchsäure). Derselbe Prozess hätte ohne das erfindungsgemäße Verfahren (Verwerfen der meso-Lactid-Fraktion und Wertung als Verlust) nur eine Ausbeute von 83,6 %. Damit führt das erfindungsgemäße Beispiel zu einer Steigerung Ausbeute an teilkristallinem PLA um 11,4 %.

### Beispiel 2: Erfindungsgemäße Herstellung der Mischung

Die Pilotanlage gemäß Beispiel 1 wird mit der gleichen Einstellung gefahren wie in Beispiel 1. Nur die Einstellung der zweiten Rektifizierkolonne wird so verändert, dass eine größere Menge an polymerisationsfähiger meso-Lactid-Fraktion als Seitenstrom entsteht als in Beispiel 1. Die Fraktion enthält 40,2% meso-Lactid neben 58,4 % L-Lactid und 1,4 % D-Lactid. Die Konzentration der Carboxylgruppen beträgt 3 mmol/kg.

Diese Fraktion wird in einer Reaktorkaskade aus zwei kontinuierlich durchströmten Reaktoren bei einer Endtemperatur von 150°C bis zu einem Restmonomergehalt von 3,5 % und einer I.V. von 1,45 g/dl polymerisiert. Als Polymerisationskatalysator dient Zinn(II)-octoat. Dieses PDLLA wird mit dem parallel polymerisierten PLLA vermischt, der Anteil des PDLLA in der Mischung beträgt 16,7%.

Das aus der Mischung des PLLAs mit dem PDLLA hergestellte Granulat hat einen Schmelzpunkt von 160,1 °C, einen D-Gehalt von 9,5% und einen Kristallinitätsgrad (DSC) von 36,8 %.

Die molare Ausbeute an teilkristallinem PLA-Granulat, bezogen auf die eingesetzte Milchsäure beträgt in diesem Beispiel 96,0 % des theoretischen Wertes (mol Milchsäureeinheiten im PLA pro mol eingesetzter Milchsäure). Derselbe Prozess hätte ohne das erfindungsgemäße Verfahren (Verwerfen der meso-Lactid-Fraktion und Wertung als Verlust) nur eine Ausbeute von 80,0 %. Damit führt das erfindungsgemäße Beispiel zu einer Steigerung Ausbeute an teilkristallinem PLA um 16 %.

### Vergleichsbeispiel 3: Separate Herstellung von PLLA und PDLLA

Die Pilotanlage aus Beispiel 1 wird in der gleichen Weise betrieben wie in Beispiel 1 beschrieben. Das überwiegend aus L-Lactid hergestellte Polymerisat (PLLA) wird gemäß Fig. 2 jedoch nicht mit dem aus überwiegend meso-Lactid hergestellten Polymerisat (PDLLA) vermischt, sondern beide Schmelzeströme werden separat mit dem Stabilisator Phosphorsäure vermischt, entmonomerisiert und granuliert.

Das PLLA-Granulat hat einen Schmelzpunkt von 157,6 °C einen D-Gehalt von 5,4% und einen Kristallinitätsgrad (DSC) von 42,2%. Das PDLLA-Granulat zeigt einen Glasübergangspunkt bei 52,4°C und keinen Schmelzpunkt. Das Produkt ist amorph.

### Beispiel 4: Spritzguss, thermische Eigenschaften und Molmasse

PLLA, PDLLA aus Vergleichsbeispiel 3 und die Mischung mit 12% PDLLA aus Beispiel 1 wurden als Granulat sorgfältig getrocknet und auf einer Spritzgussmaschine des Typs BOY 22A zu Schulterstäben verarbeitet. Die Einstellung der Maschine, wie Temperaturprofil über dem Extruder, Spritzdruck, Schließkraft etc. wurde für alle 3 Proben gleich gehalten. Mit Gelpermeationschromatographie (GPC) wurde das Zahlenmittel (Mn) und das Gewichtsmittel (Mw) der Molmassen sowie die Polydispersität (PD) der Ausgangsmaterialien und der gespritzten Stäbe gemessen. Die Methode ist im Anhang genauer beschrieben.

| **Probe** | **Mn** | **Mw** | **PD** |
|---|---|---|---|
| PLLA, Granulat | 80.000 | 220.000 | 2,7 |
| PLLA, Stab | 74.000 | 170.000 | 2,3 |
| PDLLA, Granulat | 130.000 | 270.000 | 2,1 |
| PDLLA, Stab | 85.000 | 200.000 | 2,3 |
| Mischung, Granulat | 100.000 | 230.000 | 2,3 |
| Mischung, Stab | 100.000 | 190.000 | 1,9 |

Mittels Differential-Thermoanalyse (DSC) wurden Schmelzpunkt und Schmelzwärme des Granulats und der Stäbe gemessen. Es wurden die beim 1. Aufheizen der Probe gemessenen Werte benutzt:

| **Probe** | **Schmelztemp.[°C]** | **Schmelzwärme[J/g]** | **Kristallinitätsgrad[%]** |
|---|---|---|---|
| PLLA, Gran. | 157,6 | 38,4 | 42,2 |
| PLLA, Stab | 157,6 | 33,9 | 37,3 |
| PDLLA, Gran. | (52,4) | 0 | 0 |
| PDLLA, Stab | (52,4) | 0 | 0 |
| Mischung, Gran. | 161,2 | 33,4 | 36,7 |
| Mischung, Stab | 161,2 | 33,5 | 36,8 |

PDLLA zeigt wie zu erwarten nur eine Glasübergangstemperatur (in Klammern) und keinen Schmelzvorgang. PLLA und die Mischung sind sich als Granulat und im verarbeiteten Zustand (Stab) bezüglich Schmelztemperatur und Schmelzwärme sehr ähnlich.

Die Wärmeformbeständigkeit der Schulterstäbe wurde mit einem Drei-Punkt-Biegeversuch über die Randfaserdehnung ermittelt. In Anlehnung an die Norm zur Messung des HDT-B-Wertes wurde eine Biegespannung von 0,45 N/mm² aufgebracht und die Temperatur mit 2K/min von Raumtemperatur ausgehend erhöht. Die Temperatur, bei der eine Randfaserdehnung von 0,2% erreicht wird ist der sog. HDT-B-Wert.

| **Probe** | **HDT-B [°C]** |
|---|---|
| PLLA, Stab | 49 |
| PDLLA, Stab | 40 |
| Mischung, Stab | 48 |

Damit ist die Wärmeformbeständigkeit der Mischung unwesentlich geringer wie die des PLLAs, während die Wärmeformbeständigkeit des PDLLAs deutlich darunter liegt.

### Beispiel 5: Mechanischen Eigenschaften

Die Stäbe wurden im Zugversuch auf einer Universalprüfmaschine 1445 der Fa. Zwick geprüft. Es wurde ein 10 kN-Kraftsensor verwendet. Die Einspannlänge betrug 100 mm, die Prüfgeschwindigkeit 50 mm/min. Es wurde eine Vorspannung von 0,1 MPa eingestellt. **Tabelle 1** zeigt die Ergebnisse Festigkeit, Dehnung und Elastizitätsmodul. Es handelt sich um Mittelwerte aus 2 bis 5 Einzelversuchen.

**Tabelle 1**

| **Probe** | **Zeit [Tage]** | **Festigkeit [MPa]** | **Dehnung [%]** | **Modul [GPa]** |
|---|---|---|---|---|
| PLLA | 0 | 69,9 | 5,4 | 2,9 |
| PDLLA | 0 | 48,4 | 3,9 | 2,9 |
| Mischung | 0 | 70,9 | 5,5 | 2,9 |

Während bei PDLLA Festigkeit und Dehnung deutlich reduziert sind, gibt es keine signifikanten Unterschiede zwischen PLLA und der Mischung. Die Beimischung von 12% PDLLA zu PLLA wirkt sich demnach nicht auf Festigkeit und Dehnung des PLLAs aus.

Neben den Zugversuchen wurden Schlagbiegeversuche bei Raumtemperatur und bei -18°C durchgeführt. Es wurde ein Pendelschlagwerk der Fa. W. Ohst mit einem Hammer mit einem Arbeitsvermögen von 4 J verwendet. Proben, die bei -18°C geprüft wurden, wurden über Nacht in einem Gefrierschrank bei dieser Temperatur konditioniert. Die Ergebnisse zeigt Tabelle 2.

**Tabelle 2**

| **Probe** | **Temperatur** | **Charpy ungekerbt [kJ/m²]** | **Standardabw.** |
|---|---|---|---|
| PLLA | Raumtemp. | 31,1 | 8,0 |
| PDLLA | Raumtemp. | 18,0 | 7,0 |
| Mischung | Raumtemp. | 28,1 | 4,0 |
| PLLA | -18°C | 27,1 | 5,0 |
| PDLLA | -18°C | 15,0 | 2,8 |
| Mischung | -18°C | 26,1 | 4,8 |

### Beispiel 6: Einfluss auf die Hydrolysebeständigkeit

Spritzgegossene Schulterstäbe aus PLLA, PDLLA und einer Mischung aus PLLA und 12% PDLLA wie in Beispiel 2 wurden in einer Klimakammer KPK 400 der Fa. feutron bei 40°C und 90% relativer Luftfeuchte gelagert. Alle 10 Tage wurden Proben von jeder PLA-Sorte entnommen und im Zugversuch auf einer Universalprüfmaschine 1445 der Fa. Zwick untersucht. Die Ergebnisse sind in **Tabelle 3** enthalten.

**Tabelle 3**

| **Probe** | **Zeit [Tage]** | **Festigkeit [Mpa]** | **Dehnung [%]** | **Modul [GPa]** |
|---|---|---|---|---|
| PLLA | 0 | 69,9 | 5,4 | 2,9 |
| PDLA | 0 | 48,4 | 3,9 | 2,9 |
| Mischung | 0 | 70,9 | 5,5 | 2,9 |
| | | | | |
| PLLA | 10 | 61,1 | 4,1 | 2,7 |
| PDLA | 10 | 6,4 | 3,0 | 1,0 |
| Mischung | 10 | 62,5 | 4,8 | 2,6 |
| | | | | |
| PLLA | 21 | 61,5 | 3,9 | 2,8 |
| PDLA | 21 | ---- | ---- | ---- |
| Mischung | 21 | 61,3 | 5,6 | 2,7 |
| | | | | |
| PLLA | 31 | 58,9 | 3,3 | 2,8 |
| PDLA | 31 | ---- | ---- | ---- |
| Mischung | 31 | 61,3 | 5,1 | 2,8 |
| | | | | |
| PLLA | 42 | 59,8 | 3,1 | 2,6 |
| PDLA | 42 | ---- | ---- | ---- |
| Mischung | 42 | 62,9 | 4,0 | 2,6 |
| | | | | |
| | | Erläuterung: ---- | nicht messbar | |

PLLA und die Mischung unterscheiden sich nicht bei Festigkeit und Dehnung im Rahmen der Messgenauigkeit. Das gilt für alle Zeitpunkte des Messprogramms. Damit erweist sich die Mischung als ebenso hydrolysebeständig wie PLLA. Demgegenüber zeigt PDLLA bereits nach 10 Tagen Lagerzeit einen starken Eigenschaftsverlust und bei noch längeren Zeiten ein Zerfließen der Stäbe mit nicht mehr auswertbaren Eigenschaften.

**Bezugszeichenliste**

| | |
|---|---|
| 101 | Rektifizierkolonne |
| 102 | Milchsäure, ca. 90%ig |
| 103 | Wasser |
| 104, 104a | Kondensator |
| 105, 105a | Reaktorkaskade für Polykondensation |
| 106 | Reaktor für die zyklisierende Depolymerisation |
| 107 | Rohlactid |
| 108 | Reinigungsvorrichtung für Rohlactid |
| 109, 109a | Polymerisation 1 |
| 110, 110a | Polymerisation 2 |
| 111, 111a, 111b | Entmonomerisierung |
| 112, 112a, 112b | Statischer Mischer |
| 113, 113a, 113b, 113d | Granulierung |
| 114, 114a, 114d | Kristallisation |
| 115, 115a, 115b, 115d | Trocknung |
| 116 | PLA-Granulat kristallin, 6-30% D |
| 117 | PLLA-Granulat kristallin, 0-6% D |
| 118 | PDLLA-Granulat amorph, 6-60% D |
| 119 | 2.(meso-Lactid) Fraktion |
| 120 | 1. (überwiegend L-Lactid enthaltende) Fraktion |
| 121 | Reinigungsvorrichtung für meso-Lactid-Fraktion |
| 122 | Stabilisatoren, Additive |
| 123, 123a | Teilstrom, zur Vermischung abgezweigt |
| 124 | Granulatmischer |
| 125 | Granulatmischung |
| 126 | Extruder |
| 127 | Schmelzflüssiges Gemisch |
| 128 | Verarbeitung |
| 129 | Fertiger PLA-Artikel |
| 130 | Vakuum |
| 100 | Entnahmemöglichkeit für Rückstand der Depolymerisation |

## Patentansprüche

1. Verfahren zur Herstellung einer kristallisierbaren Polymilchsäuremischung (PLA), bei dem
a) Milchsäure zu einem Oligomer polykondensiert wird,
b) das Oligomer zu einem Roh-Lactid depolymerisiert wird,
c) das Roh-Lactid zu einem Rein-Lactid gereinigt wird, wobei eine gleichzeitige Auftrennung in eine L-Lactid-reiche Fraktion mit einem Gehalt von maximal 6 Gew.-% D-Milchsäureeinheiten und eine meso-Lactid-reiche Fraktion mit einem Gehalt von mindestens 15 Gew.-% meso-Lactid oder in eine D-Lactid-reiche Fraktion mit einem Gehalt von maximal 6 Gew.-% L-Milchsäureeinheiten und eine meso-Lactid-reiche Fraktion mit einem Gehalt von mindestens 15 Gew.-% meso-Lactid erfolgt,
d) eine separate Ringöffnungspolymerisation der meso-Lactid-reichen Fraktion zu einer meso-Lactid-reichen Polymilchsäureformmasse (PDLLA) und der L-Lactid- bzw. der D-Lactid-reichen Fraktion zu einer L-Lactid-reichen Polymilchsäureformmasse (PLLA) bzw. zu einer D-Lactid-reichen Polymilchsäureformmasse (PDLA) durchgeführt wird, sowie
e) Erzeugen der Polymilchsäuremischung (PLA) durch Mischen zumindest eines Teils der meso-Lactid-reichen Polymilchsäureformmasse (PDLLA) und zumindest eines Teils der L-Lactid-reichen Polymilchsäureformmasse (PLLA) bzw. zumindest eines Teils der D-Lactid-reichen Polymilchsäureformmasse (PDLA).

2. Verfahren nach Anspruch 1, **dadurch gekennzeichnet, dass** das Mischen derart durchgeführt wird, dass für den Fall, dass ein Mischen der meso-Lactid-reichen Polymilchsäureformmasse (PDLLA) und der L-Lactid-reichen Polymilchsäureformmasse (PLLA) erfolgt, der durchschnittliche Gehalt der D-Milchsäureeinheiten in der resultierenden Polymilchsäuremischung (PLA) zwischen 6 und 30 Gew.-%, bevorzugt zwischen 6 und 20 Gew.-% beträgt und für den Fall, dass ein Mischen der meso-Lactid-reichen Polymilchsäureformmasse (PDLLA) und der D-Lactid-reichen Polymilchsäureformmasse (PDLA) erfolgt, der durchschnittliche Gehalt der L-Milchsäureeinheiten in der resultierenden Polymilchsäuremischung (PLA) zwischen 6 und 30 Gew.-%, bevorzugt zwischen 6 und 20 Gew.-% beträgt.

3. Verfahren nach einem der vorhergehenden Ansprüche, **dadurch gekennzeichnet, dass** die L-Lactid-reiche Fraktion auf einen Gehalt von 0 bis 6 Gew.-% an D-Milchsäureeinheiten aufgereinigt wird und/oder die hieraus erzeugte L-Lactid-reiche Polylactidformmasse (PLLA) einen Gehalt von 0 bis 6 Gew.-%an D-Milchsäureeinheiten aufweist,
bzw. die D-Lactid-reiche Fraktion auf einen Gehalt von 0 bis 6 Gew.-% L-Milchsäureeinheiten und/oder die hieraus erzeugte D-Lactid-reiche Polylactidformmasse (PDLA) einen Gehalt von 0 bis 6 Gew.-% an L-Milchsäureeinheiten aufweist,
und/oder die meso-Lactid-reiche Fraktion auf einen Gehalt von 15 bis 100 Gew.-%, bevorzugt 50 bis 100 Gew.-% meso-Lactid aufgereinigt wird und/oder die hieraus erzeugte meso-Lactid-reiche Polymilchsäureformmasse (PDLLA) einen von meso-Lactid-Einheiten abgeleiteten Gehalt von 15 bis 100 Gew.-%, bevorzugt 50 bis 100 Gew.-% aufweist.

4. Verfahren nach einem der vorhergehenden Ansprüche, **dadurch gekennzeichnet, dass** die L-Lactid-reiche Fraktion auf einen Gehalt von 94 bis 100 Gew.-% an L-Milchsäureeinheiten aufgereinigt wird und/oder die hieraus erzeugte L-Lactid-reiche Polylactidformmasse (PLLA) einen Gehalt von 94 bis 100 Gew.-% an L-Milchsäureeinheiten aufweist,
bzw. die D-Lactid-reiche Fraktion auf einen Gehalt von 94 bis 100 Gew.-% D-Milchsäureeinheiten aufgereinigt wird und/oder die hieraus erzeugte D-Lactid-reiche Polylactidformmasse (PLLA) einen Gehalt von 94 bis 100 Gew.-% an D-Milchsäureeinheiten aufweist.

5. Verfahren nach einem der vorhergehenden Ansprüche, **dadurch gekennzeichnet, dass** zum Erzeugen der Polymilchsäuremischung (PLA) 1 bis 50 Gew.-Teile, bevorzugt 1 bis 30 Gew.-Teile der meso-Lactid-reichen Polymilchsäureformmasse (PDLLA) und 99 bis 50 Gew.-Teile, bevorzugt 99 bis 70 Gew.-Teile der L-Lactid-reichen Polymilchsäureformmasse (PLLA) bzw. 99 bis 50 Gew.-Teile, bevorzugt 99 bis 70 Gew.-Teile der D-Lactid-reichen Polymilchsäureformmasse (PDLA) gemischt werden.

6. Verfahren nach einem der vorhergehenden Ansprüche, **dadurch gekennzeichnet, dass** beim Reinigungsschritt c)
a) die meso-Lactid-reiche Fraktion auf einen Carboxylgruppengehalt von maximal 20 mmol/kg, bevorzugt maximal 10 mmol/kg, bevorzugt maximal 5 mmol/kg, besonders bevorzugt maximal 3 mmol/kg und/oder
b) die L-Lactid-reiche Fraktion bzw. die D-Lactid-reiche Fraktion auf einen Carboxylgruppengehalt von maximal 10 mmol/kg, bevorzugt maximal 5 mmol/kg
aufgereinigt wird.

7. Verfahren nach einem der vorhergehenden Ansprüche, **dadurch gekennzeichnet, dass** bei der Ringöffnungspolymerisation
a) der meso-Lactid-reichen Fraktion eine meso-Lactid-reiche Polymilchsäureformmasse (PDLLA) mit einer intrinsischen Viskosität von 0,80 bis 1,80 und/oder
b) der L-Lactid- bzw. der D-Lactid-reichen Fraktion eine L-Lactid-reichen Polymilchsäureformmasse (PLLA) bzw. eine D-Lactid-reichen Polymilchsäureformmasse (PDLA) mit einer intrinsischen Viskosität von 1,0 bis 2,0
erzeugt wird.

8. Verfahren nach einem der vorhergehenden Ansprüche, **dadurch gekennzeichnet, dass** vor, während und/oder nach dem Mischen der meso-Lactid-reichen Polymilchsäureformmasse (PDLLA) und der L-Lactid-reichen Polymilchsäureformmasse (PLLA) bzw. der D-Lactid-reichen Polymilchsäureformmasse (PDLA)
a) Stabilisatoren und/oder Additive zugemischt werden,
b) eine Entmonomerisierung,
c) eine Abkühlung und/oder Granulierung und/oder
d) eine Kristallisation, Trocknung und Abkühlung in einem Schachttrockner mit gerührter Kristallisationszone, Trocknungszone und Rohrbündelkühler
durchgeführt wird.

9. Verfahren nach einem der vorhergehenden Ansprüche, **dadurch gekennzeichnet, dass** die eingesetzte Milchsäure eine Isomeren-Reinheit von mindestens 95 %, bevorzugt mindestens 99 % aufweist.

10. Verfahren nach einem der vorhergehenden Ansprüche, **dadurch gekennzeichnet, dass** zumindest ein Teil der meso-Lactid-reichen Polymilchsäureformmasse (PDLLA) und zumindest ein Teil der L-Lactid-reichen Polymilchsäureformmasse (PLLA) bzw. der D-Lactid-reichen Polymilchsäureformmasse (PDLA) unmittelbar nach ihrer separaten Herstellung mittels Ringöffnungspolymerisation zumindest
a) in schmelzflüssigem Zustand gemeinsam stabilisiert und gemischt, oder
b) separat stabilisiert und entmonomerisiert sowie anschließend in schmelzflüssigem Zustand gemischt, und/oder
c) separat granuliert und zu einer Granulatmischung gemischt
werden.

11. Verfahren nach einem der vorhergehenden Ansprüche, **dadurch gekennzeichnet, dass** die erzeugte Mischung in schmelzflüssiger Form unmittelbar oder die Granulatmischung unmittelbar oder separat weiterverarbeitet wird, insbesondere zu Formkörpern, wie z.B. Fäden, Folien oder geformten Artikeln.

12. Verfahren nach einem der vorhergehenden Ansprüche, **dadurch gekennzeichnet, dass** die molare Ausbeute der Polymilchsäuremischung (PLA), bezogen auf die eingesetzte Milchsäure mindestens 95 % beträgt.

13. Vorrichtung zur Herstellung einer Polymilchsäuremischung (PLA), umfassend
a) mindestens einen Polykondensationsreaktor (105a, 105b) zur Erzeugung von Oligomeren von Milchsäure durch Polykondensation,
b) dem mindestens einen Polykondensationsreaktor (105a, 105b) nachgeschaltet mindestens eine Vorrichtung zur Erzeugung von Roh-Lactid (106) durch Depolymerisation der Oligomeren von Milchsäure,
c) der mindestens einen Vorrichtung zur Erzeugung von Roh-Lactid (106) nachgeschaltet mindestens eine Vorrichtung zur Reinigung des Roh-Lactids (108) zu einem Reinlactid, die eine Auftrennung des Roh-Lactids in eine L-Lactid-reiche Fraktion (120) mit einem Gehalt von maximal 6 Gew.-% D-Milchsäureeinheiten und eine meso-Lactid-reiche Fraktion (119) mit mindestens 15 Gew.-% meso-Lactid oder in eine D-Lactid-reiche Fraktion mit maximal 6 Gew.-% L-Milchsäureeinheiten und eine meso-Lactid-reiche Fraktion mit mindestens 15 Gew.-% meso-Lactid ermöglicht,
d) der mindestens einen Vorrichtung zur Reinigung des Roh-Lactids (108) nachgeschaltet mindestens zwei separate Polymerisationsreaktoren (109, 109a, 110, 110a), wobei in mindestens einem ersten Polymerisationsreaktor (109, 109a) eine Ringöffnungspolymerisation der L-Lactid- bzw. der D-Lactid-reichen Fraktion (119) zu einer L-Lactid-reichen Polymilchsäureformmasse (PLLA) bzw. zu einer D-Lactid-reichen Polymilchsäureformmasse (PDLA) und in mindestens einem zweiten Polymerisationsreaktor (110, 110a) eine Ringöffnungspolymerisation der meso-Lactid-reichen Fraktion (120) zu einer meso-Lactid-reichen Polymilchsäureformmasse (PDLLA) durchgeführt wird, sowie
e) den Polymerisationsreaktoren (109, 109a, 110, 110a) nachgeschaltet mindestens eine Vorrichtung zum Mischen (112, 112a, 112b, 124) zumindest eines Teils der meso-Lactid-reichen Polymilchsäureformmasse (PDLLA) und zumindest eines Teils der L-Lactid-reichen Polymilchsäureformmasse (PLLA) bzw. zumindest eines Teils der D-Lactid-reichen Polymilchsäureformmasse (PDLA).

14. Vorrichtung nach vorhergehendem Anspruch, **dadurch gekennzeichnet, dass** die Vorrichtung zur Reinigung des Roh-Lactids (108) eine zusätzliche Reinigungsvorrichtung (121) für die meso-Lactid-reiche Fraktion (119), bevorzugt eine Rektifikationskolonne oder eine Trennwandkolonne umfasst.

15. Vorrichtung nach einem der Ansprüche 13 oder 14, **dadurch gekennzeichnet, dass** die Vorrichtung zur Reinigung des Roh-Lactids (108) eine Trennwandkolonne mit mindestens zwei Seitenabzügen (119, 120) und/oder eine Vorrichtung zur Umkristallisation des Lactids aus einer Schmelze oder Lösung ist.

16. Vorrichtung nach einem der Ansprüche 13 bis 15, **dadurch gekennzeichnet, dass** die Vorrichtung zum Mischen (112, 112a, 112b, 124) ein statischer Mischer für Schmelzeströme und/oder ein Granulatmischer (124) ist.

17. Vorrichtung nach einem der Ansprüche 13 bis 16, **dadurch gekennzeichnet, dass** den Polymerisationsreaktoren nachgeschaltet mindestens eine Zufuhr für Stabilisatoren und/oder Additive (122), mindestens eine Entmonomerisierungsvorrichtung (111, 111a, 111b), mindestens eine Granuliervorrichtung (113, 113a, 113b), mindestens eine Kristallisationsvorrichtung (114, 114a) und/oder mindestens eine Trocknungsvorrichtung (115, 115a, 115b) nachgeschaltet ist.

18. Vorrichtung nach einem der Ansprüche 13 bis 17, **dadurch gekennzeichnet, dass** dem mindestens einen ersten Polymerisationsreaktor (109, 109a) und dem mindestens einen zweiten Polymerisationsreaktor (110, 110a)
a) eine Zusammenführung für zumindest Teile der jeweilig erzeugten Polylactidströme mit einem statischen Mischelement (112, 112a, 112b) sowie ggf. dem statischen Mischelement (112, 112a, 112b) vorgeschaltet eine Zugabemöglichkeit für Stabilisatoren und/oder Additive (122), oder
b) jeweils eine separate Zugabemöglichkeit für Stabilisatoren und/oder Additive (122), nachfolgend jeweils eine separate Entmonomerisierungsvorrichtung (111, 111a, 111b), und/oder
c) jeweils eine separate Granuliervorrichtung (113, 113a, 113b) sowie ein Granulatmischer (124)
nachgeschaltet ist.

19. Vorrichtung nach einem der Ansprüche 13 bis 18, **dadurch gekennzeichnet, dass** sich an den Granulatmischer (124) eine Vorrichtung zur Erzeugung einer Schmelze aus dem Granulat (126), bevorzugt ein Extruder sowie eine Vorrichtung zur Verarbeitung der Schmelze (113d, 114d, 115d, 128), insbesondere eine Granuliervorrichtung (113d), eine Kristallisationsvorrichtung (114d), eine Trocknungsvorrichtung (115d) und/oder eine Vorrichtung zur Herstellung von Formkörpern (128) anschließt.

20. Polymilchsäuremischung (PLA) mit einem durchschnittlichen Gehalt an
a) L-Milchsäureeinheiten zwischen 70 und 94 Gew.-%, bevorzugt zwischen 80 und 94 Gew.-% und D-Milchsäureeinheiten zwischen 6 und 30 Gew.-%, bevorzugt 6 bis 20 Gew.-%, oder
b) D-Milchsäureeinheiten zwischen 70 und 94 Gew.-%, bevorzugt zwischen 80 und 94 Gew.-% und L-Milchsäureeinheiten zwischen 6 und 30 Gew.-%, bevorzugt 6 bis 20 Gew.-%,
**gekennzeichnet durch** eine Zugfestigkeit von mindestens 60 MPa und eine Bruchdehnung von mindestens 5,0%, wobei diese Werte auch in feuchter Luft von 90% relativer Feuchte bei einer Temperatur von 40°C über mindestens 30 Tage beibehalten werden, herstellbar nach einem Verfahren nach einem der Ansprüche 1 bis 12, wobei die Zugfestigkeit und die Bruchdehnung mittels den in der Beschreibung angegebenen Methoden bestimmt werden.

21. Polymilchsäuremischung (PLA) nach vorhergehendem Anspruch, **gekennzeichnet durch** einen Gehalt von
a) 1 bis 50 Gew.-Teilen, bevorzugt 1 bis 30 Gew.-Teilen einer meso-Lactid-reichen Polymilchsäureformmasse (PDLLA) mit einem von meso-Lactid-Einheiten abgeleiteten Gehalt von 15 Gew.-% bis 100 Gew.-%, bevorzugt 50 bis 100 Gew.-%,
und
b) 99 bis 50 Gew.-Teilen, bevorzugt 99 bis 70 Gew.-Teilen einer L-Lactid-reichen Polymilchsäureformmasse (PLLA) mit einem Gehalt von 0 bis 6 Gew.-% an D-Milchsäureeinheiten bzw. einer D-Lactid-reichen Polymilchsäureformmasse (PDLA) mit einem Gehalt von 0 bis 6 Gew.-% an L-Milchsäureeinheiten,
wobei die Mischung ohne Zugabe von Nukleierungsmitteln und Kristallisationsbeschleunigern einen Kristallinitätsgrad aufweist, der höchstens 10% unter dem Kristallinitätsgrad einer reinen polymerisierten und kristallisierten L-Lactid-reichen Polymilchsäureformmasse (PLLA) mit einem Gehalt von 0 bis 6 Gew.-% an D-Milchsäureeinheiten bzw. einer D-Lactid-reichen Polymilchsäureformmasse (PDLA) mit einem Gehalt von 0 bis 6 Gew.-% an L-Milchsäureeinheiten liegt.

22. Polymilchsäuremischung (PLA) nach einem der beiden vorhergehenden Ansprüche, in Form eines homogenen Gemischs der meso-Lactid-reichen Polymilchsäureformmasse (PDLLA) und der L-Lactid-reichen Polymilchsäureformmasse (PLLA) bzw. der D-Lactid-reichen Polymilchsäureformmasse (PDLA) oder eines Granulats dieses Gemischs.

23. Polymilchsäuremischung (PLA) mit einem durchschnittlichen Gehalt an
a) L-Milchsäureeinheiten zwischen 70 und 94 Gew.-%, bevorzugt zwischen 80 und 94 Gew.-% und D-Milchsäureeinheiten zwischen 6 und 30 Gew.-%, bevorzugt 6 bis 20 Gew.-%, oder
b) D-Milchsäureeinheiten zwischen 70 und 94 Gew.-%, bevorzugt zwischen 80 und 94 Gew.-% und L-Milchsäureeinheiten zwischen 6 und 30 Gew.-%, bevorzugt 6 bis 20 Gew.-%,
mit einem Gehalt von
c) 1 bis 50 Gew.-Teilen, bevorzugt 1 bis 30 Gew.-Teilen einer meso-Lactid-reichen Polymilchsäureformmasse (PDLLA) mit einem von meso-Lactid-Einheiten abgeleiteten Gehalt von 15 Gew.-% bis 100 Gew.-%, bevorzugt 50 bis 100 Gew.-%,
und
d) 99 bis 50 Gew.-Teilen, bevorzugt 99 bis 70 Gew.-Teilen einer L-Lactid-reichen Polymilchsäureformmasse (PLLA) mit einem Gehalt von 0 bis 6 Gew.-% an D-Milchsäureeinheiten bzw. einer D-Lactid-reichen Polymilchsäureformmasse (PDLA) mit einem Gehalt von 0 bis 6 Gew.-% an L-Milchsäureeinheiten,
in Form einer Mischung eines Granulates der meso-Lactid-reichen Polymilchsäureformmasse (PDLLA) und eines Granulates der L-Lactid-reichen Polymilchsäureformmasse (PLLA) bzw. der D-Lactid-reichen 3Polymilchsäureformmasse (PDLA).

## Claims

1. Method for the production of a crystallisable polylactic acid mixture (PLA), in which
a) lactic acid is polycondensed to form an oligomer,
b) the oligomer is depolymerised to form a crude lactide,
c) the crude lactide is purified to form a pure lactide, wherein a simultaneous separation into an L-lactide-rich fraction with a content of at most 6% by weight of D-lactic acid units and a meso-lactide-rich fraction with a content of at least 15% by weight of meso-lactide or into a D-lactide-rich fraction with a content of at most 6% by weight of L-lactic acid units and a meso-lactide-rich fraction with a content of at least 15% by weight of meso-lactide is effected,
d) a separate ring-opening polymerisation of the meso-lactide-rich fraction to form a meso-lactide-rich polylactic acid moulding compound (PDLLA) and of the L-lactide- or of the D-lactide-rich fraction to form an L-lactide-rich polylactic acid moulding compound (PLLA) or to form a D-lactide-rich polylactic acid moulding compound (PDLA) is implemented, and
e) production of the polylactic acid mixture (PLA) by mixing at least a part of the meso-lactide-rich polylactic acid moulding compound (PDLLA) and at least a part of the L-lactide-rich polylactic acid moulding compound (PLLA) or at least a part of the D-lactide-rich polylactic acid moulding compound (PDLA).

2. Method according to claim 1, **characterised in that** the mixing is implemented such that, in the case where mixing of the meso-lactide-rich polylactic acid moulding compound (PDLLA) and of the L-lactide-rich polylactic acid moulding compound (PLLA) is effected, the average content of the D-lactic acid units in the resulting polylactic acid mixture (PLA) is between 6 and 30% by weight, preferably between 6 and 20% by weight, and in the case where mixing of the meso-lactide-rich polylactic acid moulding compound (PDLLA) and of the D-lactide-rich polylactic acid moulding compound (PDLA) is effected, the average content of the L-lactic acid units in the resulting polylactic acid mixture (PLA) is between 6 and 30% by weight, preferably between 6 and 20% by weight.

3. Method according to one of the preceding claims, **characterised in that** the L-lactide-rich fraction is purified to a content of 0 to 6% by weight of D-lactic acid units and/or the L-lactide-rich polylactide moulding compound (PLLA) produced herefrom has a content of 0 to 6% by weight of D-lactic acid units,
or the D-lactide-rich fraction has a content of 0 to 6% by weight of L-lactic acid units and/or the D-lactide-rich polylactide moulding compound (PDLA) produced herefrom has a content of 0 to 6% by weight of L-lactic acid units,
and/or the meso-lactide-rich fraction is purified to a content of 15 to 100% by weight, preferably 50 to 100% by weight, of meso-lactide and/or the meso-lactide-rich polylactic acid moulding compound (PDLLA) produced herefrom has a content, derived from meso-lactide units, of 15 to 100% by weight, preferably 50 to 100% by weight.

4. Method according to one of the preceding claims, **characterised in that** the L-lactide-rich fraction is purified to a content of 94 to 100% by weight of L-lactic acid units and/or the L-lactide-rich polylactide moulding compound (PLLA) produced herefrom has a content of 94 to 100% by weight of L-lactic acid units,
or the D-lactide-rich fraction is purified to a content of 94 to 100% by weight of D-lactic acid units and/or the D-lactide-rich polylactide moulding compound (PLLA) produced herefrom has a content of 94 to 100% by weight of D-lactic acid units.

5. Method according to one of the preceding claims, **characterised in that** for the production of the polylactic acid mixture (PLA), 1 to 50 parts by weight, preferably 1 to 30 parts by weight, of the meso-lactide-rich polylactic acid moulding compound (PDLLA) and 99 to 50 parts by weight, preferably 99 to 70 parts by weight, of the L-lactide-rich polylactic acid moulding compound (PLLA) or 99 to 50 parts by weight, preferably 99 to 70 parts by weight, of the D-lactide-rich polylactic acid moulding compound (PDLA) are mixed.

6. Method according to one of the preceding claims, **characterised in that**, during purification step c),
a) the meso-lactide-rich fraction is purified to a carboxyl group content of at most 20 mmol/kg, preferably at most 10 mmol/kg, preferably at most 5 mmol/kg, particularly preferred at most 3 mmol/kg and/or
b) the L-lactide-rich fraction or the D-lactide-rich fraction is purified to a carboxyl group content of at most 10 mmol/kg, preferably at most 5 mmol/kg.

7. Method according to one of the preceding claims, **characterised in that**, during the ring-opening polymerisation
a) of the meso-lactide-rich fraction, a meso-lactide-rich polylactic acid moulding compound (PDLLA) with an intrinsic viscosity of 0.80 to 1.80 is produced and/or
b) of the L-lactide- or the D-lactide-rich fraction, an L-lactide-rich polylactic acid moulding compound (PLLA) or a D-lactide-rich polylactic acid moulding compound (PDLA) with an intrinsic viscosity of 1.0. to 2.0
is produced.

8. Method according to one of the preceding claims, **characterised in that** before, during and/or after mixing the meso-lactide-rich polylactic acid moulding compound (PDLLA) and the L-lactide-rich polylactic acid moulding compound (PLLA) or the D-lactide-rich polylactic acid moulding compound (PDLA)
a) stabilisers and/or additives are mixed in,
b) a demonomerisation,
c) a cooling and/or granulation and/or
d) a crystallisation, drying and cooling in a shaft dryer with agitated crystallisation zone, drying zone and shell-and-tube cooler
is implemented.

9. Method according to one of the preceding claims, **characterised in that** the lactic acid used has an isomer purity of at least 95%, preferably at least 99%.

10. Method according to one of the preceding claims, **characterised in that** at least a part of the meso-lactide-rich polylactic acid moulding compound (PDLLA) and at least a part of the L-lactide-rich polylactic acid moulding compound (PLLA) or of the D-lactide-rich polylactic acid moulding compound (PDLA), immediately after separate production thereof by means of ring-opening polymerisation, are at least
a) stabilised and mixed together in a molten state, or
b) stabilised and demonomerised separately and subsequently mixed in a molten state, and/or
c) granulated separately and mixed to form a granulate mixture.

11. Method according to one of the preceding claims, **characterised in that** the produced mixture is further processed directly in molten form or the granulate mixture is further processed directly or separately, in particular to form moulded bodies, such as e.g. threads, films or moulded articles.

12. Method according to one of the preceding claims, **characterised in that** the molar yield of the polylactic acid mixture (PLA), relative to the lactic acid used, is at least 95%.

13. Device for the production of a polylactic acid mixture (PLA), comprising
a) at least one polycondensation reactor (105a, 105b) for producing oligomers of lactic acid by polycondensation,
b) subsequent to the at least one polycondensation reactor (105a, 105b), at least one device for producing crude lactide (106) by depolymerisation of the oligomers of lactic acid,
c) subsequent to the at least one device for producing crude lactide (106), at least one device for purifying the crude lactide (108) to form a pure lactide, which enables separation of the crude lactide into an L-lactide-rich fraction (120) with a content of at most 6% by weight of D-lactic acid units and a meso-lactide-rich fraction (119) with at least 15% by weight of meso-lactide or into a D-lactide-rich fraction with at most 6% by weight of L-lactic acid units and a meso-lactide-rich fraction with at least 15% by weight of meso-lactide,
d) subsequent to the at least one device for purifying the crude lactide (108), at least two separate polymerisation reactors (109, 109a, 110, 110a), wherein in at least a first polymerisation reactor (109, 109a), a ring-opening polymerisation of the L-lactide- or the D-lactide-rich fraction (119) to form an L-lactide-rich polylactic acid moulding compound (PLLA) or to form a D-lactide-rich polylactic acid moulding compound (PDLA) and, in at least a second polymerisation reactor (110, 110a), a ring-opening polymerisation of the meso-lactide-rich fraction (120) to form a meso-lactide-rich polylactic acid moulding compound (PDLLA)is implemented, and
e) subsequent to the polymerisation reactors (109, 109a, 110, 110a), at least one device for mixing (112, 112a, 112b, 124) at least a part of the meso-lactide-rich polylactic acid moulding compound (PDLLA) and at least a part of the L-lactide-rich polylactic acid moulding compound (PLLA) or at least a part of the D-lactide-rich polylactic acid moulding compound (PDLA).

14. Device according to the preceding claim, **characterised in that** the device for purifying the crude lactide (108) comprises an additional purification device (121) for the meso-lactide-rich fraction (119), preferably a rectification column or a membrane column.

15. Device according to one of the claims 13 or 14, **characterised in that** the device for purifying the crude lactide (108) is a membrane column with at least two side outflows (119, 120) and/or a device for recrystallising the lactide from a melt or solution.

16. Device according to one of the claims 13 to 15, **characterised in that** the device for the mixing (112, 112a, 112b, 124) is a static mixer for melt streams and/or a granulate mixer (124).

17. Device according to one of the claims 13 to 16, **characterised in that**, subsequent to the polymerisation reactors, at least one supply for stabilisers and/or additives (122), at least one demonomerisation device (111, 111a, 111b), at least one granulation device (113, 113a, 113b), at least one crystallisation device (114, 114a) and/or at least one drying device (115, 115a, 115b) is subsequently connected.

18. Device according to one of the claims 13 to 17, **characterised in that**, subsequent to the at least one first polymerisation reactor (109, 109a) and to the at least one second polymerisation reactor (110, 110a),
a) a merging means for at least parts of the respectively produced polylactide streams with a static mixing element (112, 112a, 112b) and also, possibly connected before the static mixing element (112, 112a, 112b), an addition possibility for stabilisers and/or additives (122), or
b) respectively a separate addition possibility for stabilisers and/or additives (122), subsequently respectively a separate demonomerisation device (111, 111a, 111b) and/or
c) respectively a separate granulation device (113, 113a, 113b) and also a granulate mixer (124)
is connected.

19. Device according to one of the claims 13 to 18, **characterised in that**, connected to the granulate mixer (124), there is a device for producing a melt from the granulate (126), preferably an extruder and also a device for processing the melt (113d, 114d, 115d, 128), in particular a granulation device (113d), a crystallisation device (114d), a drying device (115d) and/or a device for producing of moulded articles (128).

20. Polylactic acid mixture (PLA) having an average content of
a) L-lactic acid units between 70 and 94% by weight, preferably between 80 and 94% by weight, and D-lactic acid units between 6 and 30% by weight, preferably 6 to 20% by weight, or
b) D-lactic acid units between 70 and 94% by weight, preferably between 80 and 94% by weight, and L-lactic acid units between 6 and 30% by weight, preferably 6 to 20% by weight,
**characterised by** a tensile strength of at least 60 MPa and a breaking elongation of at least 5.0%, these values being maintained even in humid air of 90% relative humidity at a temperature of 40°C over at least 30 days, wherein the tensile strength is determined with the methods described in the specification.

21. Polylactic acid mixture (PLA) according to the preceding claim, **characterised by** a content of
a) 1 to 50 parts by weight, preferably 1 to 30 parts by weight, of a meso-lactide-rich polylactic acid moulding compound (PDLLA) with a content, derived from meso-lactide units, of 15% by weight to 100% by weight, preferably 50 to 100% by weight,
and
b) 99 to 50 parts by weight, preferably 99 to 70 parts by weight of an L-lactide-rich polylactic acid moulding compound (PLLA) with a content of 0 to 6% by weight of D-lactic acid units or a D-lactide-rich polylactic acid moulding compound (PDLA) with a content of 0 to 6% by weight of L-lactic acid units,
wherein the mixture, without addition of nucleation agents and crystallisation accelerators, has a degree of crystallinity which is at most 10% below the degree of crystallinity of a pure polymerised and crystallised L-lactide-rich polylactic acid moulding compound (PLLA) with a content of 0 to 6% by weight of D-lactic acid units or of a D-lactide-rich polylactic acid moulding compound (PDLA) with a content of 0 to 6% by weight of L-lactic acid units.

22. Polylactic acid mixture (PLA) according to one of the both preceding claims, in the form of a homogeneous mixture of the meso-lactide-rich polylactic acid moulding compound (PDLLA) and of the L-lactide-rich polylactic acid moulding compound (PLLA) or of the D-lactide-rich polylactic acid moulding compound (PDLA) or of a granulate of this mixture.

23. Polylactic acid mixture (PLA) having an average content of
a) L-lactic acid units between 70 and 94% by weight, preferably between 80 and 94% by weight, and D-lactic acid units between 6 and 30% by weight, preferably 6 to 20% by weight, or
b) D-lactic acid units between 70 and 94% by weight, preferably between 80 and 94%, and L-lactic acid units between 6 and 30% by weight, preferably 6 to 20% by weight,
having a content of
c) 1 to 50 parts by weight, preferably 1 to 30 parts by weight, of a meso-lactide-rich polylactic acid moulding compound (PDLLA) with a content, derived from meso-lactide units, of 15% by weight to 100% by weight, preferably 50 to 100% by weight,
and
d) 99 to 50 parts by weight, preferably 99 to 70 parts by weight, of an L-lactide-rich polylactic acid moulding compound (PLLA) with a content of 0 to 6% by weight of D-lactic acid units or of a D-lactide-rich polylactic acid moulding compound (PDLA) with a content of 0 to 6% by weight of L-lactic acid units,
in the form of a mixture of a granulate of the meso-lactide-rich polylactic acid moulding compound (PDLLA) and of a granulate of L-lactide-rich polylactic acid moulding compound (PLLA) or of the D-lactide-rich polylactic acid moulding compound (PDLA).

## Revendications

1. Procédé de fabrication d'un mélange cristallisable de poly(acide lactique) (PLA), dans lequel
a) on polycondense de l'acide lactique pour obtenir un oligomère,
b) on dépolymérise l'oligomère pour obtenir un lactide brut,
c) on purifie le lactide brut pour obtenir un lactide pur, en procédant simultanément à une séparation en une fraction riche en L-lactide, ayant une teneur maximale de 6 % en poids de motifs acide D-lactique, et en une fraction riche en méso-lactide, ayant une teneur d'au moins 15 % en poids en méso-lactide, ou en une fraction riche en D-lactide, ayant une teneur maximale de 6 % en poids de motifs acide L-lactique, et en une fraction riche en méso-lactide, ayant une teneur d'au moins 15 % en poids en méso-lactide,
d) on procède à une polymérisation distincte par décyclisation de la fraction riche en méso-lactide pour obtenir un mélange à mouler de poly(acide lactique) riche en méso-lactide (PDLLA), et de la fraction riche en L-lactide ou en D-lactide pour obtenir un mélange à mouler de poly(acide lactique) riche en L-lactide (PLLA) ou en un mélange à mouler de poly(acide lactique) riche en D-lactide (PDLA), ainsi que
e) on produit le mélange de poly(acide lactique) (PLA) par mélange d'au moins une partie du mélange à mouler de poly(acide lactique) riche en méso-lactide (PDLLA) et d'au moins une partie du mélange à mouler de poly(acide lactique) riche en L-lactide (PLLA) ou au moins d'une partie du mélange à mouler de poly(acide lactique) riche en D-lactide (PDLA).

2. Procédé selon la revendication 1, **caractérisé en ce que** le mélange est mis en oeuvre de telle sorte que, dans le cas où on procède à un mélange du mélange à mouler de poly(acide lactique) riche en méso-lactide (PDLLA) et du mélange à mouler de poly(acide lactique) riche en L-lactide (PLLA), la teneur moyenne en motifs acide D-lactique du mélange de poly(acide lactique) (PLA) obtenu est comprise entre 6 et 30 % en poids, de préférence entre 6 et 20 % en poids, et dans le cas où on procède au mélange à mouler de poly(acide lactique) riche en méso-lactide (PDLLA) et du mélange à mouler de poly(acide lactique) riche en D-lactide (PDLA), la teneur moyenne en motifs acide L-lactique du mélange de poly(acide lactique) (PLA) obtenu est comprise entre 6 et 30 % en poids, de préférence entre 6 et 20 % en poids.

3. Procédé selon l'une des revendications précédentes, **caractérisé en ce que** la fraction riche en L-lactide est purifiée jusqu'à une teneur de 0 à 6 % en poids en motifs acide D-lactique, et/ou le mélange à mouler de poly(acide lactique) riche en L-lactide (PLLA) obtenu à partir d'elle présente une teneur de 0 à 6 % en poids en motifs acide D-lactique,
ou bien la fraction riche en D-lactide est purifiée jusqu'à une teneur de 0 à 6 % en poids de motifs acide L-lactique, ou le mélange à mouler de polylactide riche en D-lactide (PDLA) produit à partir d'elle présente une teneur de 0 à 6 % en poids en motifs acide L-lactique,
et/ou la fraction riche en méso-lactide est purifiée jusqu'à une teneur de 15 à 100 % en poids, de préférence de 50 à 100 % en poids en méso-lactide, et/ou le mélange à mouler de poly(acide lactique) riche en méso-lactide produit (PDLLA) à partir d'elle présente une teneur dérivant des motifs méso-lactide, de 15 à 100 % en poids, de préférence de 50 à 100 % en poids.

4. Procédé selon l'une des revendications précédentes, **caractérisé en ce que** la fraction riche en L-lactide est purifiée jusqu'à une teneur de 94 à 100 % en poids en motifs acide L-lactique et/ou le mélange à mouler de polylactide riche en L-lactide (PLLA) produit à partir d'elle présente une teneur de 94 à 100 % en poids en motifs acide L-lactique,
ou encore la fraction riche en D-lactide est purifiée jusqu'à une teneur de 94 à 100 % en poids en motifs acide D-lactique et/ou le mélange à mouler de polylactide riche en D-lactide (PLLA) produit à partir d'elle présente une teneur de 94 à 100 % en poids en motifs acide D-lactique.

5. Procédé selon l'une des revendications précédentes, **caractérisé en ce que**, pour produire le mélange de poly(acide lactique) (PLA), on mélange 1 à 50 parties en poids, de préférence 1 à 30 parties en poids, du mélange à mouler de poly(acide lactique) riche en méso-lactide (PDLLA) et 99 à 50 parties en poids, de préférence 99 à 70 parties en poids, du mélange à mouler de poly(acide lactique) riche en L-lactide (PLLA), ou 99 à 50 parties en poids, de préférence 99 à 70 parties en poids, du mélange à mouler de poly(acide lactique) riche en D-lactide (PDLA).

6. Procédé selon l'une des revendications précédentes, **caractérisé en ce que**, dans l'étape de purification c), on purifie
a) la fraction riche en méso-lactide de sorte à obtenir une teneur en groupes carboxyle au maximum de 20 mmol/kg, de préférence au maximum de 10 mmol/kg, de préférence au maximum de 5 mmol/kg, de manière particulièrement préférée au maximum de 3 mmol/kg, et/ou
b) la fraction riche en L-lactide ou la fraction riche en D-lactide de sorte à obtenir une teneur en groupes carboxyle au maximum de 10 mmol/kg, de préférence au maximum de 5 mmol/kg.

7. Procédé selon l'une des revendications précédentes, **caractérisé en ce que**, lors de la polymérisation par décyclisation
a) de la fraction riche en méso-lactide, on produit un mélange à mouler de poly(acide lactique) riche en méso-lactide (PDLLA) présentant une viscosité intrinsèque de 0,80 à 1,80, et/ou
b) de la fraction riche en L-lactide ou en D-lactide, on produit un mélange à mouler de poly(acide lactique) riche en L-lactide (PLLA) ou un mélange à mouler de poly(acide lactique) riche en D-lactide (PDLA) présentant une viscosité intrinsèque de 1,0 à 2,0.

8. Procédé selon l'une des revendications précédentes, **caractérisé en ce qu'**avant, pendant et/ou après le mélange du mélange à mouler de poly(acide lactique) riche en méso-lactide (PDLLA) et du mélange à mouler de poly(acide lactique) riche en L-lactide (PLLA) ou du mélange à mouler de poly(acide lactique) riche en D-lactide (PDLA),
a) on ajoute des stabilisants et/ou des additifs,
on procède
b) à une démonomérisation,
c) à un refroidissement et/ou à une granulation, et/ou
d) à une cristallisation, un séchage et un refroidissement dans une tour de séchage comportant une zone de cristallisation avec agitation, une zone de séchage et un refroidisseur à faisceau tubulaire.

9. Procédé selon l'une des revendications précédentes, **caractérisé en ce que** l'acide lactique utilisé présente une pureté isomérique d'au moins 95 %, de préférence d'au moins 99 %.

10. Procédé selon l'une des revendications précédentes, **caractérisé en ce qu'**au moins une partie du mélange à mouler de poly(acide lactique) riche en méso-lactide (PDLLA) et au moins une partie du mélange à mouler de poly(acide lactique) riche en L-lactide (PLLA) ou du mélange à mouler de poly(acide lactique) riche en D-lactide (PDLA) sont au moins
a) stabilisées et mélangées ensemble à l'état fondu, ou
b) séparément stabilisées et démonomérisées, puis mélangées à l'état fondu, et/ou
c) séparément granulées et mélangées pour donner un mélange de granulés.

11. Procédé selon l'une des revendications précédentes, **caractérisé en ce que** le mélange produit à l'état fondu est soumis à une post-transformation immédiate, ou que le mélange de granulés est soumis immédiatement ou séparément à une post-transformation, en particulier pour donner des objets moulés tels que des fils, des feuilles ou des articles moulés, par exemple.

12. Procédé selon l'une des revendications précédentes, **caractérisé en ce que** le rendement molaire du mélange de poly(acide lactique) (PLA), rapporté à l'acide lactique utilisé, est d'au moins 95 %.

13. Dispositif pour la fabrication d'un mélange de poly(acide lactique) (PLA), comprenant :
a) au moins un réacteur de polycondensation (105a, 105b), pour la production par polycondensation d'oligomères de l'acide lactique,
b) en aval de l'au moins un réacteur de polycondensation (105a, 105b), un dispositif pour la production de lactide brut (106) par dépolymérisation des oligomères de l'acide lactique,
c) en aval de l'au moins un dispositif pour la production de lactide brut (106), au moins un dispositif pour la purification du lactide brut (108) en un lactide pur, qui permet une séparation du lactide brut en une fraction riche en L-lactide (120) présentant une teneur maximale de 6 % en poids de motifs acide D-lactique et en une fraction riche en méso-lactide (119), contenant au moins 15 % en poids de méso-lactide, ou en une fraction riche en D-lactide contenant au maximum 6 % en poids de motifs acide L-lactique et une fraction riche en méso-lactide contenant au moins 15 % en poids de méso-lactide,
d) en aval de l'au moins un dispositif pour la purification du lactide brut (108), deux réacteurs de polymérisation distincts (109, 109a, 110, 110a) ; dans au moins un premier réacteur de polymérisation (109, 109a), une polymérisation par décyclisation de la fraction riche en L-lactide ou en D-lactide (119) est mise en oeuvre pour donner un mélange à mouler de poly(acide lactique) riche en L-lactide (PLLA) ou un mélange à mouler de poly(acide lactique) riche en D-lactide (PDLA), et, dans au moins un deuxième réacteur de polymérisation (110, 110a), une polymérisation par décyclisation de la fraction riche en méso-lactide (120) est mise en oeuvre pour donner un mélange à mouler de poly(acide lactique) riche en méso-lactide (PDLLA), ainsi que
e) en aval des réacteurs de polymérisation (109, 109a, 110, 110a), au moins un dispositif pour le mélange (112, 112a, 112b, 124) d'au moins une partie du mélange à mouler de poly(acide lactique) riche en méso-lactide (PDLLA) et d'au moins une partie du mélange à mouler de poly(acide lactique) riche en L-lactide (PLLA), ou d'au moins une partie du mélange à mouler de poly(acide lactique) riche en D-lactide (PDLA).

14. Dispositif selon la revendication précédente, **caractérisé en ce que** le dispositif pour la purification du lactide brut (108) comprend un dispositif de purification supplémentaire (121) pour la fraction riche en méso-lactide (119), de préférence une colonne de rectification ou une colonne à paroi de séparation.

15. Dispositif selon l'une des revendications 13 ou 14, **caractérisé en ce que** le dispositif pour la purification du lactide brut (108) est une colonne à paroi de séparation comportant au moins deux soutirages latéraux (119, 120) et/ou un dispositif pour la recristallisation du lactide dans une masse fondue ou dans une solution.

16. Dispositif selon l'une des revendications 13 à 15, **caractérisé en ce que** le dispositif pour le mélange (112, 112a, 112b, 124) est un mélangeur statique pour des flux de masse fondue ou un mélangeur de granulés (124).

17. Dispositif selon l'une des revendications 13 à 16, **caractérisé en ce que**, en aval des réacteurs de polymérisation, sont installés au moins un dispositif d'amenée pour des stabilisants et/ou des additifs (122), au moins un dispositif de démonomérisation (111, 111a, 111b), au moins un dispositif de granulation (113, 113a, 113b), au moins un dispositif de cristallisation (114, 114a) et/ou au moins un dispositif de séchage (115, 115a, 115b).

18. Dispositif selon l'une des revendications 13 à 17, **caractérisé en ce que** sont installés, en aval de l'au moins un premier réacteur de polymérisation (109, 109a) et de l'au moins un deuxième réacteur de polymérisation (110, 110a)
a) une jonction pour au moins des parties des différents flux de polylactide produits, comportant un élément mélangeur statique (112, 112a, 112b), ainsi qu'éventuellement, en amont de l'élément mélangeur statique (112, 112a, 112b), une possibilité d'addition pour des stabilisants et/ou des additifs (122), ou
b) après chaque possibilité d'addition distincte pour des stabilisants et/ou des additifs (122), un dispositif distinct de démonomérisation (111, 111a, 111b), et/ou
c) pour chacun, un dispositif distinct de granulation (113, 113a, 113b), ainsi qu'un mélangeur de granulés (124).

19. Dispositif selon l'une des revendications 13 à 18, **caractérisé en ce que** le mélangeur de granulés (124) est suivi d'un dispositif pour la production d'une masse fondue à partir du granulé (126), de préférence une extrudeuse, ainsi qu'un dispositif pour la transformation de la masse fondue (113d, 114d, 115d, 128), en particulier un dispositif de granulation (113d), un dispositif de cristallisation (114d), un dispositif de séchage (115d) et/ou un dispositif pour la fabrication d'objets moulés (128).

20. Mélange de poly(acide lactique) (PLA) présentant une teneur moyenne
a) en motifs acide L-lactique comprise entre 70 et 94 % en poids, de préférence entre 80 et 94 % en poids, et en motifs acide D-lactique comprise entre 6 et 30 % en poids, de préférence entre 6 et 20 % en poids, ou
b) en motifs acide D-lactique comprise entre 70 et 94 % en poids, de préférence entre 80 et 94 % en poids, et en motifs acide L-lactique comprise entre 6 et 30 % en poids, de préférence entre 6 et 20 % en poids,
**caractérisé par** une résistance à la traction d'au moins 60 MPa et par un allongement à la rupture d'au moins 5,0 %, ces valeurs se maintenant aussi dans de l'air humide à 90 % d'humidité relative à une température de 40 °C pendant au moins 30 jours, pouvant être fabriqué par un procédé selon l'une des revendications 1 à 12, la résistance à la traction et l'allongement à la rupture étant déterminés par les méthodes décrites dans la description.

21. Mélange de poly(acide lactique) (PLA) selon la revendication précédente, **caractérisé en ce qu'**il contient
a) 1 à 50 parties en poids, de préférence 1 à 30 parties, en poids d'un mélange à mouler de poly(acide lactique) riche en méso-lactide (PDLLA) ayant une teneur dérivant des motifs méso-lactide de 15 % en poids à 100 % en poids, de préférence de 50 à 100 % en poids, et
b) 99 à 50 parties en poids, de préférence 99 à 70 parties en poids, d'un mélange à mouler de poly(acide lactique) riche en L-lactide (PLLA) ayant une teneur de 0 à 6 % en poids en motifs acide D-lactique, ou d'un mélange à mouler de poly(acide lactique) riche en D-lactide (PDLA) ayant une teneur de 0 à 6 % en poids en motifs acide L-lactique,
le mélange présentant, sans addition d'agents de nucléation et d'accélérateurs de cristallisation, un degré de cristallinité qui est au maximum 10 % inférieur au degré de cristallinité d'un mélange à mouler de poly(acide lactique) riche en L-lactide (PLLA) pur, polymérisé et cristallisé, ayant une teneur de 0 à 6 % en poids en motifs acide D-lactique, ou d'un mélange à mouler de poly(acide lactique) riche en D-lactide (PDLA) ayant une teneur de 0 à 6 % en poids en motifs acide L-lactique.

22. Mélange de poly(acide lactique) (PLA) selon l'une des deux revendications précédentes, sous forme d'un mélange homogène du mélange à mouler de poly(acide lactique) riche en méso-lactide (PDLLA) et du mélange à mouler de poly(acide lactique) riche en L-lactide (PLLA), ou du mélange à mouler de poly(acide lactique) riche en D-lactide (PDLA), ou d'un granulé de ce mélange.

23. Mélange de poly(acide lactique) (PLA) ayant une teneur moyenne
a) en motifs acide L-lactique comprise entre 70 et 94 % en poids, de préférence entre 80 et 94 % en poids, et en motifs acide D-lactique comprise entre 6 et 30 % en poids, de préférence entre 6 et 20 % en poids, ou
b) en motifs acide D-lactique comprise entre 70 et 94 % en poids, de préférence entre 80 et 94 % en poids, et en motifs acide L-lactique comprise entre 6 et 30 % en poids, de préférence entre 6 et 20 % en poids,
contenant
c) 1 à 50 parties en poids, de préférence 1 à 30 parties en poids, d'un mélange à mouler de poly(acide lactique) riche en méso-lactide (PDLLA) ayant une teneur dérivant des motifs méso-lactide de 15 % en poids à 100 % en poids, de préférence de 50 à 100 % en poids, et
d) 99 à 50 parties en poids, de préférence 99 à 70 parties en poids d'un mélange à mouler de poly(acide lactique) riche en L-lactide (PLLA) ayant une teneur de 0 à 6 % en poids en motifs acide D-lactique ou d'un mélange à mouler de poly(acide lactique) riche en D-lactide (PDLA) ayant une teneur de 0 à 6 % en poids en motifs acide L-lactique,
sous forme d'un mélange d'un granulé du mélange à mouler de poly(acide lactique) riche en méso-lactide (PDLLA) et d'un granulé du mélange à mouler de poly(acide lactique) riche en L-lactide (PLLA) ou du mélange à mouler de poly(acide lactique) riche en D-lactide (PDLA).
